(19) Europäisches Patentamt
European Patent Office
Office européen des brevets

(11) **EP 3 838 941 A1**

(12) **EUROPÄISCHE PATENTANMELDUNG**

(43) Veröffentlichungstag:
**23.06.2021 Patentblatt 2021/25**

(21) Anmeldenummer: **19216832.6**

(22) Anmeldetag: **17.12.2019**

(51) Int Cl.:
*C08G 18/08* (2006.01)     *C08G 18/10* (2006.01)
*C08G 18/32* (2006.01)     *C08G 18/73* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR KONTINUIERLICHEN HERSTELLUNG VON HYDROXY-TERMINIERTEN PREPOLYMEREN**

(57) Die Erfindung betrifft ein Verfahren zur kontinuierlichen lösungsmittelfreien Herstellung von Hydroxy-terminierten Prepolymeren durch Umsetzung eines oder mehrerer monomerer Diisocyanate mit einem oder mehreren Polyolen mit einer Hydroxylzahl von 600 mg KOH/g bis 1830 mg KOH/g bestimmt gemäß DIN EN ISO 4629-2:2016 in einer Reaktionszone, die ein oder mehrere kontinuierlich durchströmte in Reihe geschaltete Rohrreaktoren umfasst.

EP 3 838 941 A1

**Beschreibung**

Die Erfindung betrifft ein Verfahren zur kontinuierlichen lösungsmittelfreien Herstellung von Hydroxy-terminierten Prepolymeren durch Umsetzung eines oder mehrerer monomerer Diisocyanate mit einem oder mehreren Polyolen mit einer Hydroxylzahl von 600 mg KOH/g bis 1830 mg KOH/g bestimmt gemäß DIN EN ISO 4629-2:2016 in einer Reaktionszone, die ein oder mehrere kontinuierlich durchströmte in Reihe geschaltete Rohrreaktoren umfasst.

Hydroxy-terminierte Polyurethanprepolymere sind wichtige Komponenten in der Polyurethanchemie. Sie werden als OH-Komponente kombiniert mit Polyisocyanaten in ZweiKomponenten Lack- oder Klebstoffsystemen verwendet. Typische Anwendungsgebiete sind Klebstoffe für die Verpackungsindustrie oder auch Systeme zur Beschichtung von Leder oder Textilien (Kunststoff Handbuch Band 7, Polyurethane, G. Oertel, Hanser Verlag, S. 99ff).

Hydroxy-terminierte Polyurethanprepolymere, die aus kurzkettigen Diolen und Polyisocyanaten aufgebaut sind, weisen wertvolle Eigenschaften aus. Als Hartsegment-Bausteine eignen sie sich hervorragend zur Modifikation diverser Produkte und Werkstoffe. Problematisch ist, dass aufgrund der hohe Dichte an reaktiven Gruppen, die Polyaddition von kurzkettigen aliphatischen Diolen mit aliphatischen Polyisocyanaten eine hohe Wärmetönung bzw. Reaktionsenthalpie aufweist, was bei unzureichender Wärmeabfuhr zur Beschädigung bis hin zur Rückbildung von Monomeren und zur Zerstörung (Veraschung) des Polyurethans führt.

In der industriellen Praxis werden kontinuierliche Herstellungsverfahren bevorzugt, da sich hier Maßstabsvergrößerungen einfacher durchführen lassen und größere Mengen mit konstanter Qualität produziert werden können. Die Verwendung von Lösungsmitteln ist ebenfalls nachteilig, da im Produkt verbleibende Restlösungsmittel in die Umwelt freigesetzt werden können und unerwünschte Eigenschaften wie beispielsweise Geruch, Toxizität und/oder eine Verschlechterung der mechanischen Eigenschaften verursachen können. Die vollständige Entfernung von Restlösungsmitteln aus einem Polymer ist grundsätzlich mit einem erhöhten technischen Aufwand und Energieverbrauch verbunden.

Ein Verfahren zur Herstellung von Polyurethan ist beispielsweise aus der WO01/14441 bekannt. Offenbart wird ein Verfahren zur Herstellung von NCO-, NH- oder OH-terminierten Polyurethanen in einem Statikmischer. Wesentlich für dieses Verfahren ist, dass die Temperatur bei der Umsetzung der Komponenten Adiabat geführt wird und/oder der Statikmischer begleitbeheizt ist und damit nur für Verfahren geeignet ist, die endotherm sind oder nur eine geringe Exothermie aufweisen. Für die Umsetzung von Komponenten, die eine hohe Reaktionsenthalphie aufweisen, d.h. deren Umsetzung miteinander stark exotherm verläuft, ist das Verfahren nicht geeignet.

EP0519734 offenbart ein Urethanisierungsreaktionsverfahren, wobei ein Polyolgemisch, enthaltend mindestens ein langkettiges Polyol mit einer maximalen Hydroxylzahl von 10 mg/g KOH, mit einer Polyisocyanat-Komponente zu einem Urethan-modifizierten Harz umgesetzt wird. Die Reaktionsmischung wird in einem Statikmischer bei Temperaturen von 90 °C - 200 °C umgesetzt. Aufgrund der geringen Dichte an funktionellen Gruppen, ist auch hier ein Energieeintrag nötig.

Nachteilig bei den oben beschriebenen Verfahren ist, dass diese sich eher für Reaktionen eignen, die entweder endotherm verlaufen oder nur eine geringe Wärmetönung aufweisen und daher einen konstanten Wärmeeintrag erfordern oder adiabat gefahren werden müssen. Bei Systemen, die eine hohe Wärmetönung der Reaktion aufweisen ($\leq$ -350 kJ/kg), ist der adiabatische Temperaturanstieg problematisch. Ausgehend von Monomeren bei einer Temperatur ausreichend für ein unkatalysiertes Anspringen der Reaktion (> 50 °C), würde bei adiabatischer Fahrweise die Temperatur der Reaktionsprodukte auf deutlich über 300 °C ansteigen. Die Herstellung und Verarbeitung von Polyurethanen bei Temperaturen von > 200 °C über einen längeren Zeitraum ist aufgrund der Vielzahl von thermischen Nebenreaktionen problematisch. Eine Temperatur von 300 °C liegt darüber hinaus oberhalb der Ceiling Temperatur der Polyurethanbindung. Die Ceiling Temperatur ist als die Temperatur definiert, bei der die Depolymerisation im Gleichgewicht mit der Polymerisation steht.

Aufgabe der vorliegenden Erfindung war es daher, ein kontinuierliches, lösungsmittelfreies Verfahren zur Herstellung von Hydroxy-terminierten Prepolymeren bereitzustellen, das es ermöglicht Polyadditionsreaktion mit großer negativer Reaktionsenthalpie / kg Reaktionsmasse im industriellen Maßstab durchzuführen.

Diese Aufgabe wird gelöst durch ein kontinuierliches, lösungsmittelfreies Verfahren zur Herstellung von Hydroxy-terminierten Prepolymeren durch Umsetzung der Komponenten

(A) einem oder mehreren aliphatischen, cycloaliphatischen oder araliphatischen monomeren Diisocyanaten,
(B) einem oder mehreren Diolen mit einer Hydroxylzahl von 600 mg KOH/g bis 1830 mg KOH/g bestimmt gemäß DIN EN ISO 4629-2:2016, und verschieden von A und B und gegebenenfalls
(C) in Gegenwart von einem oder mehreren Schwermetall-freien Katalysatoren und/oder Zusatzstoffen,

in einer Reaktionszone, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und einen Rohrreaktor oder mehrere in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt.

Der Vorteil des erfindungsgemäßen Verfahrens besteht darin, dass die Temperatur der Reaktionsmasse bei der erfindungsgemäßer Ausführung sehr gut kontrolliert werden kann und es daher nicht zu wärmebedingten Schädigungen, wie z.B. Stippenbildung oder Verfärbungen im Polyurethanprodukt kommt. Ebenfalls können durch die gute Temperaturkontrolle Nebenreaktionen kontrolliert und gegebenenfalls verhindert oder bevorzugt werden. Denkbar ist beispielsweise eine enge Kontrolle des Allophanatgehalts. Weiterhin ermöglicht das erfindungsgemäße Verfahren eine gute Skalierbarkeit vom Labor in einen industriellen Maßstab.

Das Wort "ein" im Zusammenhang mit zählbaren Größen ist im Rahmen der vorliegenden Erfindung nur dann als Zahlwort zu verstehen, wenn dies ausdrücklich angegeben wird (z. B. durch den Ausdruck "genau ein"). Wenn im Folgenden beispielsweise von "einem Diol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Diolen enthält.

Unter einem "lösungsmittelfreien Verfahren" im Rahmen der vorliegenden Erfindung wird die Umsetzung der Komponenten (A) und (B) ohne zusätzliche Verdünnungsmittel, wie beispielsweise organische Lösungsmittel oder Wasser verstanden, d.h. die Komponenten (A) und (B) werden bevorzugt unverdünnt miteinander zur Reaktion gebracht. Die Komponente (C) kann gegebenenfalls in geeigneten Verdünnungsmittel vorliegen und als Lösung oder Dispersion zu den Komponenten A und/oder B zugegeben werden. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt. Unter einem Lösungsmittel wird dabei eine Substanz verstanden in der wenigstens eine der Komponenten (A) und (B) und gegebenenfalls C gelöst, dispergiert, suspendiert oder emulgiert werden kann, welche aber nicht mit einer der Komponenten (A) und (B) und gegebenenfalls C oder mit dem/den Hydroxy-terminierten Prepolymer(en) reagiert. Im Rahmen der vorliegenden Erfindung, wird ein nicht-reaktiv terminiertes Prepolymer und/ oder nicht-reaktiv terminiertes Polymer, welche nicht mit einer der Komponenten (A) und (B) und gegebenenfalls C oder mit dem/den Hydroxy-terminierten Prepolymer(en) der Reaktionsmischung reagieren, nicht als "Lösungsmittel" angesehen.

In Rahmen der vorliegenden Erfindung wird unter einem "nicht-reaktiv terminierten Prepolymer" oder einem "nicht-reaktiv terminierten Polymer" ein Prepolymer bzw. Polymer verstanden, bei dem die reaktiven Gruppen (NCO-Gruppen oder OH-Gruppen) durch Reaktion mit geeigneten Reaktionspartnern (Kettenabbrecher) in chemische Gruppen umgewandelt wurden, die unter den genannten Reaktionsbedingungen weder mit NCO-Gruppen, noch mit OH-Gruppen reagieren. Als Kettenabbrecher eignen sich beispielsweise Mono-Alkohole wie Methanol, Mono-Amine wie Diethylamin und Monoisocyanate wie Butylisocyanat. Der molare Anteil der Kettenabbrecher kann beispielsweise von 0,001 mol-% bis 2 mol-% und bevorzugt von 0,002 mol-% bis 1 mol-% betragen, jeweils bezogen auf die Gesamtstoffmenge der entsprechenden Monomerkomponente.

"Kontinuierliches Verfahren" oder "kontinuierliche Verfahren" im Sinne der Erfindung sind solche, bei denen der Zulauf der Edukte während einer kontinuierlichen Produktion in mindestens einen Apparat und der Austrag der Produkte aus mindestens einem gleichen oder verschiedenen Apparat gleichzeitig, stattfinden, während bei diskontinuierlicher Verfahren der Zulauf der Edukte, die chemische Umsetzung und der Austrag der Produkte in der Regel zeitlich nacheinander ablaufen. Die kontinuierliche Verfahrensweise ist meistens von wirtschaftlichem Vorteil, da Reaktorstillstandszeiten infolge von Befüllungs- und Entleerungsprozessen vermieden werden.

Dem Fachmann ist bekannt, dass in der Polyurethanchemie Polymere und damit auch Prepolymere nicht als isolierte Spezies vorliegen, sondern immer als Gemische von Molekülen verschiedener Anzahl von Wiederholeinheiten und damit unterschiedlichen Molekulargewichten und gegebenenfalls auch unterschiedlicher Endgruppen vorliegen. Sowohl die Anzahl der Wiederholeinheiten pro Molekül als auch gegebenenfalls die Endgruppen sind in der Regel statistisch verteilt.

Im Rahmen der vorliegenden Erfindung werden unter dem Begriff "Prepolymer" alle Produkte/Produktmischungen verstanden, die vom Beginn der ersten Reaktion der Monomere bis zum Austrag des Endprodukts aus der Reaktionszone entstehen/existieren.

Im Rahmen der vorliegenden Erfindung wird unter dem Begriff "Hydroxy-terminiertes Prepolymer" ein Prepolymergemisch verstanden, in dem mindestens 90 Anzahl-% der Molekülenden eine Hydroxygruppe aufweisen und die verbleibenden 10 Anzahl-% Molekülenden weitere Hydroxy-Gruppen, NCO-Gruppen und/oder nicht-reaktive Gruppen aufweisen. Unter einer "nicht-reaktiven Gruppe" wird im Rahmen der vorliegenden Erfindung eine Gruppe verstanden, die unter den erfindungsgemäßen Reaktionsbedingungen weder mit NCO-Gruppen, noch mit OH-Gruppen in einer Zeiteinheit reagiert, die der erfindungsgemäßen Reaktionszeit entspricht. Eine nicht-reaktive Gruppe kann beispielsweise aus einer reaktiven NCO-Gruppe oder OH-Gruppe durch Reaktion mit geeigneten Reaktionspartnern (Kettenabbrecher) in eine nicht-reaktive Gruppe umgewandelt werden. Als Kettenabbrecher eignen sich alle monofunktionellen Verbindungen, die unter den erfindungsgemäßen Reaktionsbedingungen entweder mit einer Isocyanatgruppe oder mit einer Hydroxygruppe reagieren, beispielsweise Mono-Alkohole, wie Methanol, Mono-Amine, wie Diethylamin und Monoisocyanate, wie Butylisocyanat. Das Hydroxy-terminierte Prepolymer kann beispielsweise an einem Molekülende eine Hydroxygruppe aufweisen und an dem oder den anderen Molekülenden beispielsweise eine Alkylgruppe. Wenn im Rahmen der vorliegenden Erfindung von einem Hydroxy-terminierten Prepolymer gesprochen wird, ist hiermit auch immer ein Gemisch aus dem mindestens einen Hydroxy-terminierten Prepolymer und einem nicht-reaktiv terminierten Prepolymer umfasst. Ferner kann es sich aufgrund der Statistik der Reaktion abgesehen von Nebenreaktionen auch um ein Gemisch von nicht Hydroxy-terminierten bis zu zweifach Hydroxy-terminierten Prepolymeren handeln. Vorzugsweise handelt es sich überwiegend um ein Gemisch von zweifach Hydroxy-terminierten Prepolymeren. Erfindungsgemäß kann es sich bei dem mindestens einen Hydroxy-terminierten Prepolymer auch um ein Gemisch von mindestens einem Hydroxy-terminierten Prepolymer und mindestens einem nicht-reaktiv terminierten Prepolymer handeln.

Im Rahmen der vorliegenden Erfindung wird unter dem Begriff "monomeres Diisocyanat" ein Diisocyanat verstanden, welches keine dimeren, trimeren etc. Strukturen aufweist, Teil von dimeren, trimeren etc. Strukturen ist und/oder ein Reaktionsprodukt von einer NCO-Gruppe mit einer NCO-reaktiven Gruppe, wie beispielsweise Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen.

Im Rahmen der vorliegenden Erfindung wird unter einem "aliphatisches monomeres Diisocyanat" eine gesättigte lineare oder verzweigte Kohlenwasserstoffverbindung mit 4 - 20 Kohlenstoffatomen und zwei NCO-Gruppen verstanden. Beispiele für solche Verbindungen sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan. Die Diisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden

Im Rahmen der vorliegenden Erfindung wird unter dem Begriff "cycloaliphatisches monomeres Diisocyanat" eine unsubstituierte oder substituierte cyclische nicht aromatische Kohlenwasserstoffverbindung mit 4 - 20 Kohlenstoffatomen und zwei NCO-Gruppen verstanden. Beispiele für solche Verbindungen sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan. Die Diisocyanate und / oder dessen Vorläuferverbindungen können aus fossilen oder biologischen Quellen gewonnen worden sein.

Im Rahmen der vorliegenden Erfindung wird unter dem Begriff "aralipathisches monomeres Diisocyanat" eine Verbindung verstanden, bei der ein oder mehrere Alkylgruppe(n) mit einem aromatischen mono- oder polycyclischen Ringsystem mit 6-20 Kohlenstoffatomen verbunden sind und die an dem Alkylrest und/oder Arylrest insgesamt zwei NCO-Gruppen aufweist. Beispiele für solche Verbindungen sind 1,3- und 1,4-Bis-(isocyanatomethyl)benzol (Xylylendiisocyanat; XDI), 1,3- und 1,4-Bis(1-isocyanato-1-methyl¬ethyl)-benzol (TMXDI). Die Diisocyanate und / oder dessen Vorläuferverbindungen können aus fossilen oder biologischen Quellen gewonnen worden sein.

Im Rahmen der vorliegenden Erfindung wird unter dem Begriff "Polyol" jede organische monomere oder polymere Substanz verstanden, die zwei oder mehr Hydroxylgruppen aufweist, welche in der Lage sind mit einer NCO-Gruppe zu reagieren. Die Polyole und / oder dessen Vorläuferverbindungen können aus fossilen oder biologischen Quellen gewonnen worden sein.

Im Rahmen der vorliegenden Erfindung wird unter dem Begriff "Diol" jede organische monomere oder polymere Substanz verstanden, die zwei Hydroxylgruppen aufweist, welche in der Lage sind mit einer NCO-Gruppe zu reagieren. Die Diole und / oder dessen Vorläuferverbindungen können aus fossilen oder biologischen Quellen gewonnen worden sein.

Im Rahmen der vorliegenden Erfindung wird unter dem Begriff "aliphatisches Diol" eine gesättigte lineare oder verzweigte Kohlenwasserstoffverbindung mit 2-10 Kohlenstoffatomen und zwei Hydroxylgruppen verstanden. Beispiele für solche Verbindungen sind 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol und 1,10-Decandiol. Die aliphatische Kohlenwasserstoffkette kann ein oder mehrere Sauerstoffatome zwischen den Kohlenstoffatomen aufweisen. Beispiele für solche Verbindungen sind $HOCH_2OCH_2OH$, $HOCH_2OCH_2OCH_2OH$ und $HOCH_2(OCH_2)_nOCH_2OH$ mit n = 1 - 3. Die Diole und / oder dessen Vorläuferverbindungen können aus fossilen oder biologischen Quellen gewonnen worden sein.

Im Rahmen der vorliegenden Erfindung wird unter dem Begriff "cycloaliphatisches Diol" eine unsubstituierte oder substituierte cyclische nicht aromatische Kohlenwasserstoffverbindung mit 4-10 Kohlenstoffatomen und mit zwei Hydroxylgruppen verstanden. Beispiele für solche Verbindungen sind 1,3-Cyclobutandiol, 1,3-Cyclopentandiol, 1,2-, 1,3- und 1,4-Cyclohexandiol, 1,4-Cyclohexandimethanol, 2-Cyclohexen-1,4-diol, 2-Methyl-1,4-cyclohexandiol, 2-Ethyl-1,4-cyclohexandiol, 2,2,4,4-Tetramethyl-1,3-cyclobutandiol, 1,3-Cycloheptandiol, 1,4-Cycloheptandiol, 2-Methyl-1,4-cycloheptandiol, 4-Methyl-1,3-cycloheptandiol, 1,3-Cyclooctandiol, 1,4-Cyclooctandiol, 1,5-Cyclooctandiol, 5-Methyl-1,4-cyclooctandiol, 5-Ethyl-1,4-cyclooctandiol. Die Diole und / oder dessen Vorläuferverbindungen können aus fossilen oder biologischen Quellen gewonnen worden sein.

Im Rahmen der vorliegenden Erfindung wird unter dem Begriff "aralipathisches Polyol" eine Verbindung verstanden, bei der ein oder mehrere Alkylgruppe(n) mit einem aromatischen mono-oder polycyclischen Ringsystem mit 6-10 Kohlenstoffatomen verbunden sind und die an dem Alkylrest und/oder Arylrest insgesamt zwei Hydroxylgruppen aufweist. Beispielhaft ist dies 1,2-Benzoldimethanol. Die Diole und / oder dessen Vorläuferverbindungen können aus fossilen oder biologischen Quellen gewonnen worden sein.

Im Rahmen der vorliegenden Erfindung wird unter dem Begriff "Reaktionszone" ein Bereich verstanden in dem eine chemische Reaktion stattfindet. Die chemische Reaktion in der Reaktionszone kann in einem oder mehreren Apparaten stattfinden, beispielsweise in einem Rohrreaktor oder mehreren in Reihe geschalteten Rohrreaktoren, beispielsweise zwei, drei, vier, fünf usw. Als Rohrreaktor können verschiedene Reaktoren mit einem rohrförmigen Reaktionsbereich eingesetzte werden, die dem Fachmann für Polymerreaktionen bekannt sind, wie beispielsweise in Moran, S. und Henkel, K.-D. 2016, Reactor Types and Their Industrial Applications, Ullmann's Encyclopedia of Industrial Chemistry, 149, beschrieben. Die Rohrreaktoren weisen jeweils mindestens einen Zulauf, einen Ablauf, eine Mischvorrichtung und mindestens einen Wärmeübertrager auf. Beispiele für solche Rohreaktoren sind statische Mischer, Schlaufenreaktoren oder Extruder. In der Reaktionszone können verschiedene Rohrreaktoren vorliegen. Beispielsweise kann der erste Rohrreaktor ein statischer Mischer und der zweite Rohrreaktor ein Schlaufenreaktor sein. Es ist auch möglich, dass die Rohrreaktoren als Mehrkanalreaktoren vorliegen, beispielsweise als ein Bündel von Rohrreaktoren. In jeden Rohrreaktor werden die Komponenten A, B und/oder gegebenenfalls C durch einen Zulauf oder mehrere Zuläufe zugeführt. Die mehreren in Reihe geschalteten Rohrreaktoren können direkt miteinander verbunden sein, d.h. der erste Rohrreaktor schließt sich direkt an den darauffolgenden Rohrreaktor an oder sie sind durch eine Transferzone miteinander verbunden. Diese Transferzone kann beispielsweise aus einem Rohr oder einer Rohrleitung bestehen welche mindestens einen Ablauf des vorherigen Rohrreaktors mit mindestens einem Zulauf des drauffolgenden Rohrreaktors verbindet. Die Transferzone kann ein Mischvorrichtung aufweisen die über die ganze Länge der Transferzone verläuft oder nur abschnittsweise. Die Transferzone kann auch einen Wärmeübertrager aufweisen, um beispielsweise die Viskosität der Reaktionsmischung in einem gewünschten Bereich zu halten. In der Transferzone kann die Reaktionsmischung ebenfalls weiter reagieren oder keine Reaktion erfolgen. Die Transferzone bzw. Transferzonen zwischen den Rohrreaktoren zählen zu der Reaktionszone. Die Reaktionszone kann in mehrere Abschnitte unterteilt sein, die jeweils eine andere Temperatur oder einen Temperaturbereich aufweisen. Es ist dabei möglich, dass sich ein Rohrreaktor über mehr als einen Abschnitt erstreckt, beispielsweise über zwei Abschnitte was dazu führt, dass in dem ersten Teil des Rohrreaktors eine Temperatur oder ein Temperaturbereich des ersten Abschnitts herrscht und im zweiten Teil des Rohrreaktors eine Temperatur oder ein Temperaturbereich des zweiten Abschnitts herrscht.

In einer bevorzugten Ausführungsform des erfindungsgemäßen Verfahrens liegt die maximale Viskosität des Stoffstroms in der Reaktionszone unterhalb von 1 Pa·s bei einer Messtemperatur von 190 °C und einer Frequenz von 10 Hz bestimmt gemäß ISO 6721-10:2015.

In einer bevorzugten Ausführungsform des erfindungsgemäßen Verfahrens liegt die Viskosität des Stoffstroms in der Reaktionszone innerhalb von 0,01 Pa·s bis 10 Pa·s, bevorzugt innerhalb von 0,05 Pa·s bis 5 Pa·s, besonders bevorzugt innerhalb von 0,07 Pa·s bis 1 Pa·s bei einer Messtemperatur von 190 °C und einer Frequenz von 10 Hz bestimmt gemäß ISO 6721-10:2015.

Im Rahmen der vorliegenden Erfindung wird unter dem Begriff "Stoffstrom" ein Reaktionsgemisch verstanden welches die Komponente (A), Komponente (B), gegebenenfalls Komponente (C), Hydroxy-terminierte Prepolymere, gegebenenfalls nicht-reaktiv terminierte Prepolymere, gegebenenfalls NCO-terminierte Prepolymere und/oder Mischungen von mindestens zweien hiervon umfasst. Der Stoffstrom kann auch ganz oder anteilig die Hydroxy-terminierten Prepolymere enthalten.

Die niedrige Viskosität des Stoffstroms hat den Vorteil, dass die verwendeten Wärmeübertrager effizient arbeiten können und Wärmeübertrager mit geringer Baugröße bzw. Oberfläche verwendet werden können. Weiterhin entsteht in den bevorzugt verwendeten durchströmten Wärmeübertragern ein geringer Druckverlust, im Vergleich zu dem, der bei der Verarbeitung von höher viskosen Prepolymeren auftritt.

In einer bevorzugten Ausführungsform des erfindungsgemäßen Verfahrens umfasst die Reaktionszone mindestens zwei kontinuierlich durchströmte in Reihe geschaltete Rohrreaktoren.

In einer bevorzugten Ausführungsform des erfindungsgemäßen Verfahrens ist die mindestens eine Mischvorrichtung ein statisches Mischelement oder eine Anordnung von statischen Mischelementen.

In einer bevorzugten Ausführungsform des erfindungsgemäßen Verfahrens liegen die Mischvorrichtung und der mindestens eine Wärmeübertrager zwischen dem Zulauf und Ablauf des Rohrreaktor und die Gesamtheit aller Mischvorrichtungen und die Gesamtheit aller Wärmeübertrager erstreckt sich über die gesamte Länge des Rohrreaktors.

Die Reaktionszone weist in einer bevorzugten Ausführungsform des erfindungsgemäßen Verfahrens einen oder mehrere Abschnitte auf, die jeweils unabhängig voneinander temperiert sind. Die Abschnitte müssen dabei nicht räumlich getrennt sein. Ein Abschnitt kann beispielsweise der von einem Wärmeübertrager temperierte Bereich sein. Ein Rohrreaktor kann beispielsweise zwei Wärmeübertrager aufweisen, die jeweils zwei Abschnitte in dem Reaktor unterschiedlich temperieren bzw. unterschiedlich viel Wärme aus den jeweiligen Abschnitten abführen. Eine Reaktionszone mit zwei Rohrreaktoren, die jeweils zwei Wärmeübertrager aufweisen, würde somit vier Abschnitte aufweisen.

In einer bevorzugten Ausführungsform weist die Reaktionszone einen ansteigenden Temperaturgradienten auf. Der Temperaturgradient steigt dabei vom Anfang der Reaktionszone, wo die Komponenten (A), (B) und gegebenenfalls (C) in die Reaktionszone kontinuierlich eingetragen werden, zum Ende der Reaktionszone, wo die Hydroxy-terminierten Prepolymere kontinuierlich ausgetragen werden, an. Vorzugsweise weist der erste Abschnitt in der Reaktionszone die niedrigste Temperatur auf, besonders bevorzugt weist der erste Abschnitt in der Reaktionszone die niedrigste Temperatur und alle darauf folgenden Abschnitte in der Reaktionszone jeweils eine höhere Temperatur auf als der jeweils vorherige Abschnitt und der letzte Abschnitt in der Reaktionszone weist die höchste Temperatur auf, d.h. Reaktionszone weist einen ansteigenden Temperaturgradienten auf.

In einer anderen Ausführungsform kann die Reaktionszone einen nicht linear ansteigenden Temperaturgradienten aufweisen. Beispielsweise kann die Reaktionszone in 5 Abschnitte unterteilt sein und die Temperatur in den ersten zwei Abschnitten ansteigen und in den letzten drei Abschnitten wieder abfallen.

Die mehreren in Reihe geschalteten Rohrreaktoren können direkt miteinander verbunden sein, d.h. der erste Rohrreaktor schließt sich direkt an den darauffolgenden Rohrreaktor an oder sie sind durch eine Transferzone miteinander verbunden. Diese Transferzone kann beispielsweise aus einem Rohr oder einer Rohrleitung bestehen welche mindestens einen Ablauf des vorherigen Rohrreaktors mit mindestens einem Zulauf des drauffolgenden Rohrreaktors verbindet. In der Transferzone kann die Reaktionsmischung ebenfalls weiter reagieren oder keine Reaktion erfolgen. Die Transferzone bzw. Transferzonen zwischen den Rohrreaktoren zählen zu der Reaktionszone.

Die Temperaturen zur Bildung der Hydroxy-terminierten Prepolymere durch das erfindungsgemäße Verfahren können in Abhängigkeit von den eingesetzten Verbindungen ausgewählt werden. Bevorzugt ist hierbei jedoch, wenn die Umsetzung bei Temperaturen von $\geq$ 40 °C bis $\leq$ 260 °C, vorzugsweise von $\geq$ 60 °C bis $\leq$ 250 °C, bevorzugter von $\geq$ 100 °C bis $\leq$ 240 °C, besonders bevorzugt von $\geq$ 120 °C bis $\leq$ 220 °C durchgeführt wird. Dabei wird toleriert, dass das Produkt bei der Umsetzung kurzfristige (< 60 Sekunden) Abweichungen der Reaktionstemperatur von den oben genannten Bereichen erfährt.

Neigen die Hydroxy-terminierten Prepolymere zur Kristallisation und besitzen einen Schmelzpunkt, so wird die Reaktion bevorzugt in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes der Hydroxy-terminierten Prepolymere durchgeführt.

In einer weiteren bevorzugten Ausführungsform des erfindungsgemäßen Verfahrens durchlaufen die Komponenten (A), (B), gegebenenfalls (C) und die gebildeten Hydroxy-terminierten Prepolymere die Abschnitte der Reaktionszone nur einmal.

Die Reaktionsenthalpie wird mit Hilfe von Wärmeübertragern abgeführt, die diese Reaktionsenthalpie als Wärme an ein Kühlmittel abgeben. Dieses Kühlmittel kann beispielsweise Wasser im flüssigen Zustand, Wasser im Siedezustand oder Wärmeträgeröl, wie beispielsweise Marlotherm SH (Fa. Sasol) oder Diphyl (Fa. Lanxess), in flüssigem Zustand sein.

Das Kühlmittel hat bevorzugt beim Eintritt in den Wärmeübertrager eine Temperatur, die oberhalb der Kristallisationstemperatur der Reaktionsmischung bei Verfahrensbedingungen liegt, um Verstopfungen zu vermeiden.

Die Wärmeübertrager können in verschiedener Art ausgeführt sein. Beispielsweise kann es sich um Rohrbündel-Wärmeübertrager mit Leerrohren oder Rohrbündel-Wärmeübertrager mit Einbauten zur Verbesserung des Wärmeübergangs (z.B. Statikmischer wie vom Typ Kenics, SMX von Sulzer oder SMXL von Sulzer) handeln, oder beispielsweise kann es sich um Platten-Wärmeübertrager handeln, oder beispielsweise kann es sich um temperierbare statische Mischer handeln, die beispielsweise vom Typ SMR (Fa. Sulzer) oder CSE-XR (Fa. Fluitec) sein können.

In einer bevorzugten Ausführungsform des erfindungsgemäßen Verfahrens weisen die ein oder mehreren Rohrreaktoren jeweils unabhängig voneinander mindestens einen Doppelmantel oder innenliegende Wärmeübertragerrohre oder mindestens einen Doppelmantel und innenliegende Wärmeübertragerrohre auf. Beispiele hierfür sind Reaktoren vom Typ SMXL (Fa. Sulzer) oder Mischer-Wärmetauscher des Typs CSE-XR (Fa. Fluitec).

In einer bevorzugten Ausführungsform des erfindungsgemäßen Verfahrens beträgt die durch die Gesamtheit der Wärmeübertrager abgeführte Wärme je Rohrreaktor von 10 % bis 90 %, vorzugsweise von 20 % bis 70 %, besonders bevorzugt von 25 % bis 60 % der in dem jeweiligen Rohrreaktor freigesetzten gesamten Reaktionsenthalpie.

Unter "gesamter Reaktionsenthalpie" im Rahmen der vorliegenden Erfindung wird die massenspezifische Änderung der Enthalpie verstanden, die bei der Polymerisationsreaktion (Polyaddition) der Komponente (A) mit Komponente (B) frei wird. Die Reaktionsenthalpie wird dabei in kJ je kg der Gesamtreaktionsmischung von Komponente (A) und Komponente (B), bei einem molaren Verhältnis von Komponente (A) zu Komponente (B) von 1,0 : 1,0 angegeben. Eine Reaktion mit einer negativen Reaktionsenthalpie wird als eine exotherme Reaktion beschrieben, das heißt, dass bei der Reaktion Energie in Form von Wärme freigesetzt wird.

In einer bevorzugten Ausführungsform des erfindungsgemäßen Verfahrens besteht die Reaktionszone aus ein oder mehreren kontinuierlich durchströmten in Reihe geschalteten Rohrreaktoren. Der oder die Rohrreaktoren sind in einer weiteren bevorzugten Ausführungsform des erfindungsgemäßen Verfahrens kontinuierlich durchströmte in Reihe geschaltete gekühlte Statikmischer.

Die Komponente (A) und die Komponente (B) gegebenenfalls in Gegenwart der Komponenten (C) werden kontinuierlich in die Reaktionszone eingetragen und die Hydroxy-terminierten Prepolymere am Ende der Reaktionszone kontinuierlich ausgetragen. Die ausgetragenen Hydroxy-terminierten Prepolymere können dabei auch als Gemisch mit nicht-reaktiv terminierten Prepolymeren vorliegen. Der molare Anteil der nicht-reaktiv terminierten Gruppen kann beispielsweise von 0,1 mol-% bis 2 mol-% und bevorzugt von 0,2 mol-% bis 1 mol-% betragen, jeweils bezogen auf die Stoffmenge der gesamten Prepolymer-Mischung.

In einer bevorzugten Ausführungsform des erfindungsgemäßen Verfahrens weisen die Hydroxy-terminierten Prepolymere eine aus den Funktionalitäten der Edukte berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 auf jeweils bezogen auf die Stoffmenge der gesamten Prepolymer-Mischung.

Die Erzeugung der Hydroxy-terminierten Prepolymere kann in einer Vielzahl von Schritten erfolgen. Die Komponente (C) kann dabei nur in einzelnen Schritten oder in allen Schritten unabhängig voneinander zugegeben werden. Dabei können auch mehrere Schritte in einem Rohreaktor durchgeführt werden.

So können in einen Rohrreaktor beispielsweise an mehreren räumlich voneinander getrennten Stellen Teilmengen der Komponente (A), Komponente (B) und/oder Komponente (C) zugeführt werden. Die Zuführung erfolgt dabei vorzugsweise am Anfang eines neuen Abschnitts oder zwischen zwei Abschnitten. Nach einer Zuführung einer Teilmenge erfolgt die Vermischung mit dem Stoffstrom durch eine Mischvorrichtung. Wenn mehr als eine Komponente gleichzeitig zugeführt werden, so werden diese vor Eintritt in den Rohrreaktor vorgemischt mit einer Mischvorrichtung. Als Mischvorrichtung sind sowohl statische als auch dynamische Mischvorrichtungen geeignet. Vorzugsweise wird ein statisches Mischelement verwendet.

In einer bevorzugten Ausführungsform des erfindungsgemäßen Verfahrens werden in einen ersten Rohrreaktor in der Reaktionszone die Gesamtmenge der Komponente (B), eine erste Teilmenge der Komponente (A) und gegebenenfalls eine erste Teilmenge der Komponente (C) eingetragen und zur Reaktion gebracht, und in mindestens einen weiteren Rohrreaktor in der Reaktionszone eine weitere Teilmenge der Komponente (A) und gegebenenfalls eine weitere Teilmenge der Komponente (C) zugeführt und zur Reaktion gebracht, wobei die Summe aller Teilmengen der Komponente (A) und die Summe aller Teilmengen der Komponente (C), die in die Reaktionszone eingetragen werden, jeweils die Gesamtmenge der eingesetzten Komponenten (A) und gegebenenfalls Komponente (C) ist, wobei der mindestens eine weitere Rohrreaktor in der Reaktionszone auf den ersten Rohrreaktor in der Reaktionszone folgt und wobei zwischen den Rohreaktoren jeweils eine Mischvorrichtung angeordnet ist, die den Stoffstrom aus dem Ablauf des vorherigen Rohrreaktors mit den weiteren Teilmengen der Komponenten (A) und Komponente (C) mischt und wobei dieses Gemisch dann in den Zulauf des nachfolgenden Rohrreaktors zugeführt wird. Die Komponente (C) kann auch als Gesamtmenge mit der Gesamtmenge der Komponente (B) und einer erste Teilmenge der Komponente (A) zugeführt werden. Die räumlich und/oder zeitlich getrennte sequenzielle Zugabe der Komponente (A) hat den Vorteil, dass hierdurch die freiwerdende Reaktionswärme schrittweise erzeugt und damit besser abgeführt und/oder genutzt werden kann, beispielsweise um die Komponenten (A) und (B) vorzuwärmen bevor diese der Reaktionszone zugeführt werden.

In einer bevorzugten Ausführungsform des erfindungsgemäßen Verfahrens werden in einen ersten Rohrreaktor in der Reaktionszone eine erste Teilmenge der Komponente (B), eine erste Teilmenge der Komponente (A) und gegebenenfalls eine erste Teilmenge der Komponente (C) eingetragen und zur Reaktion gebracht, und in mindestens einen weiteren Rohrreaktor in der Reaktionszone eine weitere Teilmenge der Komponente (B), eine weitere Teilmenge der Komponente (A) und gegebenenfalls eine weitere Teilmenge der Komponente (C) zugeführt und zur Reaktion gebracht, wobei die Summe aller Teilmengen der Komponente (A), die Summe aller Teilmengen der Komponente (B) und die Summe aller Teilmengen der Komponente (C), die in die Reaktionszone eingetragen werden, jeweils die Gesamtmenge der eingesetzten Komponenten (A), (B) und gegebenenfalls (C) ist, wobei der mindestens eine weitere Rohrreaktor in der Reaktionszone auf den ersten Rohrreaktor in der Reaktionszone folgt und wobei zwischen den Rohreaktoren jeweils eine Mischvorrichtung angeordnet ist, die den Stoffstrom aus dem Ablauf des vorherigen Rohrreaktors mit den weiteren Teilmengen der Komponenten (A), (B) und (C) mischt und wobei dieses Gemisch dann in den Zulauf des nachfolgenden Rohrreaktors zugeführt wird. Die Komponente (C) kann auch als Gesamtmenge mit einer ersten Teilmenge der Komponente (B) und einer erste Teilmenge der Komponente (A) zugeführt werden. Die räumlich und/oder zeitlich getrennte sequenzielle Zugabe der Komponente (A) und der Komponente (B) hat den Vorteil, dass hierdurch die freiwerdende Reaktionswärme schrittweise erzeugt und damit besser abgeführt und/oder genutzt werden kann, beispielsweise um die Komponenten (A) und (B) vorzuwärmen bevor diese der Reaktionszone zugeführt werden.

In einer weiteren bevorzugten Ausführungsform des erfindungsgemäßen Verfahrens werden in einem ersten Rohrreaktor in der Reaktionszone ein erstes Hydroxy-terminiertes Prepolymer aus einer ersten Teilmenge der Komponente (A) und einer ersten Teilmenge der Komponente (B) gebildet, in einem zweiten Rohrreaktor in der Reaktionszone mindestens ein NCO-terminiertes Prepolymer aus einer zweiten Teilmenge der Komponente (A) und einer zweiten Teilmenge der Komponente (B) gebildet und das erste Hydroxy-terminierte Prepolymer mit dem mindestens einen NCO-terminierten Prepolymer in einem auf den ersten Rohrreaktor folgenden weiteren (dritten) Rohrreaktor zum Hydroxy-terminierten Prepolymer bzw. den Hydroxy-terminierten Prepolymeren umgesetzt, wobei das erste Hydroxy-terminierte Prepolymer mit dem mindestens einen NCO-terminierten Prepolymer in einem Verhältnis von mindestens 2:1 umgesetzt wird. Jeweils unabhängig voneinander können das erste Hydroxy-terminierte Prepolymer, das mindestens eine NCO-terminierte Prepolymer und die Hydroxy-terminierten Prepolymere auch als Gemisch mit nicht-reaktiv terminierten Prepolymeren vorliegen. Das NCO-terminierte Prepolymer wird vorzugsweise in einem separaten Rohrreaktor hergestellt.

Im Rahmen der vorliegenden Erfindung wird unter einem "NCO-terminierten Prepolymer" ein Polymer bzw. Prepolymer verstanden, in dem mindestens 90 Anzahl-% der Molekülenden eine NCO-Gruppe aufweisen und die verbleibenden 10 Anzahl-% Molekülenden weitere NCO-Gruppen, Hydroxy-Gruppen und/oder nicht-reaktive Gruppen aufweisen. Wenn im Rahmen der vorliegenden Erfindung von einem NCO-terminierten Prepolymer gesprochen wird, kann es sich auch um ein Gemisch von NCO-terminierten Prepolymeren handeln oder um ein Gemisch von NCO-terminierten Prepolymeren und nicht-reaktiv terminierten Prepolymeren. Vorzugsweise handelt es sich um ein Gemisch von NCO-terminierten Prepolymeren. Die NCO-terminierten Prepolymere können durch Umsetzen einer Teilmenge der Komponente (A) mit einer Teilmenge der Komponente (B) erhalten werden, wobei die Komponente (A) im Überschuss vorliegt. Die Polyaddition kann in Gegenwart der Komponente (C) erfolgen. Die Temperaturen zur Bildung des mindestens einen NCO-terminierten Prepolymers durch das erfindungsgemäße Verfahren können in Abhängigkeit von den eingesetzten Verbindungen ausgewählt werden. Bevorzugt ist hierbei jedoch, wenn die Umsetzung bei Temperaturen von ≥ 60 °C bis ≤ 260 °C, vorzugsweise von ≥ 80 °C bis ≤ 250 °C, besonders bevorzugt von ≥ 100 °C bis ≤ 245 °C und ganz besonders bevorzugt von ≥ 100 °C bis ≤ 240 °C durchgeführt wird. Die NCO-Terminierung ist statistisch verteilt und die mittlere NCO-Funktionalität des NCO-terminierten Prepolymers liegt zwischen 1,8 und 2,2, bevorzugt zwischen 1,9 und 2,1 und ganz besonders bevorzugt zwischen 1,95 und 2,05. Bei dem mindestens einen NCO-terminierten Prepolymer kann es sich um ein Gemisch von mindestens einem NCO-terminierten Prepolymer und mindestens einem nicht-reaktiv terminierten Prepolymer handeln. Neigt das mindestens eine NCO-terminierte Prepolymer zur Kristallisation und besitzt es einen Schmelzpunkt, so wird die Reaktion bevorzugt in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes des mindestens einen NCO-terminierten Prepolymers durchgeführt.

In einer bevorzugten Ausführungsform des erfindungsgemäßen Verfahrens wird die Gesamtmenge der Komponente (A) in Teilmengen in die Reaktionszone eingetragen, wobei die erste eingetragene Teilmenge der Komponente (A) größer ist als jede weitere danach eingetragene Teilmenge der Komponente (A). Die erste in die Reaktionszone eingetragene Teilmenge der Komponente (A) ist vorzugsweise von 20 mol-% bis 80 mol-%, besonders bevorzugt von 25 mol-% bis 60 mol-%, noch bevorzugter von 30 mol-% bis 50 mol-% bezogen auf die molare Gesamtmenge der im Verfahren eingesetzten Komponente (A).

In einer bevorzugten Ausführungsform des erfindungsgemäßen Verfahrens werden die gemeinsam in die Reaktionszone eingebrachten Komponenten (A), (B) und gegebenenfalls (C) vor Eintritt in die Reaktionszone vorgemischt oder vordispergiert. Die Komponenten (A) und (B) liegen vorzugsweise in flüssigem Zustand vor. Bevorzugt ist auch, dass die Komponenten (A), (B) und gegebenenfalls (C) beim Eintritt in den ersten Rohrreaktor in der Reaktionszone eine Temperatur, vorzugsweise eine mittlere kalorische Temperatur, von 0 °C bis 80 °C, besonders bevorzugt von 10 °C bis 60 °C, noch bevorzugter von 20 °C bis 50 °C aufweisen. Dabei wird vorzugsweise die höherviskose Komponente höher temperiert.

Die mittlere kalorische Temperatur $T_{mix}$ wird folgendermaßen bestimmt: $h_i(T)$ ist die spezifische Enthalpie der Komponente $i$ ($i$ kann dabei für A, B oder C stehen) in Kilojoule pro Kilogramm als Funktion der Temperatur $T$, wobei alle spezifischen Enthalpien die gleichen Bezugstemperaturen aufweisen, $\dot{m}_i$ ist der Massendurchsatz der Komponente $i$ in Kilogramm pro Sekunde (der, wenn eine Komponente nicht zugegeben wird, auch gleich Null sein kann) und $T_{ein,i}$ die Eintrittstemperatur der Komponente i. Die mittlere kalorische Temperatur $T_{mix}$ erfüllt dann die Bedingung (Literatur: Seite "Richmannsche Mischungsregel". In: Wikipedia, Die freie Enzyklopädie. Bearbeitungsstand: 25. September 2018, 2:05 UTC. URL: https://de.wikipedia.org/w/index.php?title=Richmannsche_ Mischungsregel&oldid=181216395 (Abgerufen: 25. September 2018, 13:36 UTC))

$$\sum_i \dot{m}_i h_i\left(T_{ein,i}\right) = \sum_i \dot{m}_i h_i(T_{mix})$$

$$m_1 \cdot \left(h_1(T_1) - h_1(T_{mix})\right) = m_2 \cdot \left(h_2(T_2) - h_2(T_{mix})\right)$$

Wenn die spezifischen Wärmekapazitäten ($c_n$) als konstant angenommen werden, kann die Gleichung zur folgenden Gleichung umgeformt werden:

$$m_1 \cdot c_1 \cdot \left(h_1(T_1) - h_1(T_{mix})\right) = m_2 \cdot c_1 \cdot \left(h_2(T_2) - h_2(T_{mix})\right)$$

Daraus ergibt sich Gleichung 1:

$$T_{mix} = \frac{m_1 \cdot c_1 \cdot T_1 + m_2 \cdot c_2 \cdot T_2}{m_1 \cdot c_1 + m_2 \cdot c_2}$$

Für den Fall nicht konstanter Wärmekapazitäten muss mit gemittelten Wärmekapazitäten gerechnet werden.

In einer bevorzugten Ausführungsform des erfindungsgemäßen Verfahrens sind Komponenten (A), (B) und gegebenenfalls (C) oder eine Mischung der Komponenten (A) und (C) oder (B) und (C) beim Eintritt in den mindestens einen weiteren Rohrreaktor in der Reaktionszone vorgewärmt, vorzugsweise auf eine mittlere kalorische Temperatur von 70 bis 240 °C, bevorzugter von 90 bis 220 °C, besonders bevorzugt von 110 bis 200 °C. Dabei können die Komponenten (A), (B) und gegebenenfalls (C) oder eine Mischung der Komponenten (A) und (C) oder (B) und (C) getrennt voneinander vorgewärmt werden, dann in einem Vormischer vermischt werden und in den mindestens einen weiteren Rohrreaktor in der Reaktionszone zugeführt werden. Alternativ können die Komponenten (A), (B) und gegebenenfalls (C) oder eine Mischung der Komponenten (A) und (C) oder (B) und (C) in einem Vormischer vermischt werden und danach vorgewärmt werden bevor die Mischung in den mindestens einen weiteren Rohrreaktor in der Reaktionszone zugeführt wird.

Als Komponente (A) eignen sich alle dem Fachmann bekannten aliphatischen, cycloaliphatischen oder araliphatischen monomeren Diisocyanate. Geeignete Verbindungen sind vorzugsweise solche des Molekulargewichtsbereiches $\geq$ 140 g/mol bis $\leq$ 400 g/mol, wobei es unerheblich ist, ob diese mittels Phosgenierung oder nach phosgenfreien Verfahren erhalten wurden. Die Diisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden. Wenn im Rahmen der vorliegenden Erfindung von Komponente (A) gesprochen wird, kann es sich auch um ein Gemisch von mindestens zwei monomeren Diisocyanaten handeln.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Beispiele für geeignete cycloaliphatische Diisocyanate sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Beispiele für geeignete araliphatische Diisocyanate sind 1,3- und 1,4-Bis-(isocyanatomethyl)benzol (Xylylendiisocyanat; XDI), 1,3- und 1,4-Bis(1-isocyanato-1-methyl¬ethyl)-benzol (TMXDI).

Weitere ebenfalls geeignete Diisocyanate finden sich darüber hinaus beispielsweise in HOUBEN-WEYL "Methoden der organischen Chemie", Band E20 "Makromolekulare Stoffe", Georg Thieme Verlag, Stuttgart, New York 1987, S. 1587-1593 oder in Justus Liebigs Annalen der Chemie Band 562 (1949) S. 75 - 136.

In einer bevorzugten Ausführungsform des erfindungsgemäßen Verfahrens werden als Komponente (A) ein oder mehrere aliphatische und / oder cycloaliphatische monomere Diisocyanate eingesetzt, vorzugsweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus. In einer anderen bevorzugten Ausführungsform werden aliphatische Diisocyanate eingesetzt, vorzugsweise ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und noch mehr bevorzugt 1,5-Diisocyanatopentan (PDI), 1,6-Diisocyanatohexan (HDI) und/oder Mischungen aus mindestens 2 hieraus.

Als Komponente (B) werden erfindungsgemäß eine oder mehrere Diolen mit einer Hydroxylzahl von 600 mg KOH/g bis 1830 mg KOH/g, bestimmt gemäß DIN EN ISO 4629-2:2016, eingesetzt. Die Diole und / oder dessen Vorläuferverbindungen können aus fossilen oder biologischen Quellen gewonnen worden sein.

In einer bevorzugten Ausführungsform werden als Komponente (B) ein oder mehrere aliphatische, cycloaliphatische und/oder araliphatische Diole mit einer Hydroxylzahl von 600 mg KOH/g bis 1830 mg KOH/g bestimmt gemäß DIN EN ISO 4629-2:2016, eingesetzt. Dies können beispielsweise sein 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,10-Decandiol, 1,3-Cyclobutandiol, 1,3-Cyclopentandiol, 1,2-, 1,3- und 1,4-Cyclohexandiol, 1,4-Cyclohexandimethanol, 2-Cyclohexen-1,4-diol, 2-Methyl-1,4-cyclohexandiol, 2-Ethyl-1,4-cyclohexandiol, 2,2,4,4-Tetramethyl-1,3-cyclobutandiol, 1,3-Cycloheptandiol, 1,4-Cycloheptandiol, 2-Methyl-1,4-cycloheptandiol, 4-Methyl-1,3-cycloheptandiol, 1,3-Cyclooctandiol, 1,4-Cyclooctandiol, 1,5-Cyclooctandiol, 5-Methyl-1,4-cyclooctandiol und 5-Ethyl-1,4-cyclooctandiol. Wenn im Rahmen der vorliegenden Erfindung von Komponente (B) gesprochen wird, kann es sich auch um ein Gemisch von mindestens zwei Komponenten B handeln.

In einer bevorzugten Ausführungsform des erfindungsgemäßen Verfahrens werden als Komponente (B) ein oder mehrere aliphatische oder cycloaliphatische Diole mit einer Hydroxylzahl von 600 mg KOH/g bis 1830 mg KOH/g, bestimmt gemäß DIN EN ISO 4629-2:2016, eingesetzt, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus.

In einer anderen bevorzugten Ausführungsform werden aliphatische Diole mit einer Hydroxylzahl von 600 mg KOH/g bis 1830 mg KOH/g, bestimmt gemäß DIN EN ISO 4629-2:2016, eingesetzt, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, und/oder Mischungen aus mindestens 2 hieraus, bevorzugt 1,2-Ethandiol, 1,2-Propandiol, 1,3-Propandiol, 1,2-Butandiol, 1,3-Butandiol, 1,4-Butandiol, insbesondere 1,4-Butandiol und/oder Mischungen aus mindestens 2 hieraus.

In einer bevorzugten Ausführungsform des erfindungsgemäßen Verfahrens werden als Komponente (A) 1,4-Diisocyanatobutan (BDI), 1,5-Diisocyanatopentan (PDI), 1,6-Diisocyanatohexan (HDI) und/oder Mischungen aus mindestens 2 hieraus, und als Komponente (B) 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, und/oder Mischungen aus mindestens 2 hieraus verwendet. In einer besonders bevorzugten Ausführungsform des erfindungsgemäßen Verfahrens werden als Komponente (A) 1,5-Diisocyanatopentan (PDI), 1,6-Diisocyanatohexan (HDI) und/oder Mischungen aus mindestens 2 hieraus, und als Komponente (B) 1,2-Propandiol, 1,3-Propandiol, 1,2-Butandiol, 1,3-Butandiol, 1,4-Butandiol, und/oder Mischungen aus mindestens 2 hieraus verwendet. In einer besonders bevorzugten Ausführungsform des erfindungsgemäßen Verfahrens werden als Komponente (A) 1,5-Diisocyanatopentan (PDI), 1,6-Diisocyanatohexan (HDI) und/oder Mischungen aus mindestens 2 hieraus, und als Komponente (B) 1,4-Butandiol verwendet.

In einer bevorzugten Ausführungsform des erfindungsgemäßen Verfahrens werden die Hydroxy-terminierten Prepolymere durch Polyaddition von mindestens einer Kombinationen aus Komponente (A) und Komponente (B) gebildet ausgewählt aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,4-Diisocyanatobutan mit 1,7-Heptandiol, 1,4-Diisocyanatobutan mit 1,8-Octandiol, 1,4-Diisocyanatobutan mit 1,9-Nonandiol, 1,4-Diisocyanatobutan mit 1,10-Decandiol, 1,4-Diisocyanatobutan mit 1,3-Cyclobutandiol, 1,4-Diisocyanatobutan mit 1,3-Cyclopentandiol, 1,4-Diisocyanatobutan mit 1,2-, 1,3- und 1,4-Cyclohexandiol und/oder Mischungen aus mindestens 2 Isomeren, 1,4-Diisocyanatobutan mit 1,4-Cyclohexandimethanol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,5-Diisocyanatopentan mit 1,6-Hexandiol, 1,5-Diisocyanatopentan mit 1,7-Heptandiol, 1,5-Diisocyanatopentan mit 1,8-Octandiol, 1,5-Diisocyanatopentan mit 1,3-Cyclobutandiol, 1,5-Diisocyanatopentan mit 1,3-Cyclopentandiol, 1,5-Diisocyanatopentan mit 1,2-, 1,3- und 1,4-Cyclohexandiol und/oder Mischungen aus mindestens 2 Isomeren, 1,5-Diisocyanatopentan mit 1,4-Cyclohexandimethanol, 1,6-Diisocyanatohexan mit 1,2-Ethandiol, 1,6-Diisocyanatohexan mit 1,2- und/oder 1,3-Propandiol, 1,6-Diisocyanatohexan mit 1,2-, 1,3- und/oder 1,4-Butandiol, 1,6-Diisocyanatohexan mit 1,5-Pentandiol, 1,6-Diisocyanatohexan mit 1,6-Hexandiol, 1,6-Diisocyanatohexan mit 1,7-Heptandiol, 1-Isocyanato-3,3,5-trimethyl-5-isocyanatomethyl-cyclohexan mit 1,2-Ethandiol und 1-Isocyanato-3,3,5-trimethyl-5-isocyanatomethyl-cyclohexan mit 1,2- und/oder 1,3-Propandiol. In einer besonders bevorzugten Ausführungsform des erfindungsgemäßen Verfahrens werden die Hydroxy-terminierten Prepolymere durch Polyaddition von mindestens einer Kombinationen aus Komponente (A) und Komponente (B) gebildet ausgewählt aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,5-Diisocyanatopentan mit 1,6-Hexandiol, 1,6-Diisocyanatohexan mit 1,2-Ethandiol, 1,6-Diisocyanatohexan mit 1,2- und/oder 1,3-Propandiol, 1,6-Diisocyanatohexan mit 1,2-, 1,3- und/oder 1,4-Butandiol und 1,6-Diisocyanatohexan mit 1,5-Pentandiol, noch mehr bevorzugt ausgewählt aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,6-Diisocyanatohexan mit 1,2-Ethandiol, 1,6-Diisocyanatohexan mit 1,2- und/oder 1,3-Propandiol und 1,6-Diisocyanatohexan mit 1,2-, 1,3- und/oder 1,4-Butandiol. In einer noch bevorzugteren Ausführungsform des erfindungsgemäßen Verfahrens wird das mindestens eine Hydroxy-terminierte Prepolymer durch Polyaddition von mindestens einer Kombinationen aus Komponente (A) und Komponente (B) gebildet ausgewählt aus der Gruppe bestehend aus 1,5-Diisocyanatopentan mit 1,2-, 1,3- und/oder 1,4-Butandiol und 1,6-Diisocyanatohexan mit 1,2-, 1,3- und/oder 1,4-Butandiol. In einer noch mehr bevorzugteren Ausführungsform des erfindungsgemäßen Verfahrens wird das mindestens eine Hydroxy-terminierte Prepolymer durch Polyaddition von mindestens einer Kombinationen aus Komponente (A) und Komponente (B) gebildet ausgewählt aus der Gruppe bestehend aus 1,5-Diisocyanatopentan mit 1,4-Butandiol und 1,6-Diisocyanatohexan mit 1,4-Butandiol.

In einer bevorzugten Ausführungsform des erfindungsgemäßen Verfahrens zur kontinuierlichen lösungsmittelfreien Herstellung von Hydroxy-terminierten Prepolymeren werden die Komponenten (A) ein oder mehrere aliphatische, cycloaliphatische oder araliphatische monomere Diisocyanate, (B) ein oder mehrere Diole mit einer Hydroxylzahl von 600 mg KOH/g bis 1830 mg KOH/g bestimmt gemäß DIN EN ISO 4629-2:2016 und verschieden von (A) und (B) gegebenenfalls (C) in Gegenwart von ein oder mehreren Schwermetall-freien Katalysatoren und/oder Zusatzstoffen, in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A) und (B) gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) ein oder mehrere aliphatische, cycloaliphatische oder araliphatische monomere Diisocyanate,
(B) ein oder mehrere Diole mit einer Hydroxylzahl von 600 mg KOH/g bis 1830 mg KOH/g bestimmt gemäß DIN EN ISO 4629-2:2016 und verschieden von A und B gegebenenfalls
(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt und wobei die mindestens eine Mischvorrichtung ein statisches Mischelement oder eine Anordnung von statischen Mischelementen ist.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) ein oder mehrere aliphatische, cycloaliphatische oder araliphatische monomere Diisocyanate,
(B) ein oder mehrere Diole mit einer Hydroxylzahl von 600 mg KOH/g bis 1830 mg KOH/g bestimmt gemäß DIN EN ISO 4629-2:2016 und verschieden von A und B gegebenenfalls
(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt, wobei die mindestens eine Mischvorrichtung ein statisches Mischelement oder eine Anordnung von statischen Mischelementen ist und wobei die mindestens eine Mischvorrichtung und der mindestens eine Wärmeübertrager zwischen dem mindestens einen Zulauf und dem mindestens einen Ablauf des Rohrreaktor liegen und sich die Gesamtheit aller Mischvorrichtungen und die Gesamtheit aller Wärmeübertrager jeweils über die gesamte Länge des Rohrreaktors erstrecken.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) ein oder mehrere aliphatische, cycloaliphatische oder araliphatische monomere Diisocyanate,
(B) ein oder mehrere Diole mit einer Hydroxylzahl von 600 mg KOH/g bis 1830 mg KOH/g bestimmt gemäß DIN EN ISO 4629-2:2016 und verschieden von A und B gegebenenfalls
(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt, wobei die mindestens eine Mischvorrichtung ein statisches Mischelement oder eine Anordnung von statischen Mischelementen ist, wobei die mindestens eine Mischvorrichtung und der mindestens eine Wärmeübertrager zwischen dem mindestens einen Zulauf und dem mindestens einen Ablauf des Rohrreaktor liegen und sich die Gesamtheit aller Mischvorrichtungen und die Gesamtheit aller Wärmeübertrager jeweils über die gesamte Länge des Rohrreaktors erstrecken und wobei die Komponenten (A), (B), (C) und die gebildeten Hydroxy-terminierten Prepolymere die Abschnitte der Reaktionszone nur einmal durchlaufen.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) ein oder mehrere aliphatische, cycloaliphatische oder araliphatische monomere Diisocyanate,
(B) ein oder mehrere Diole mit einer Hydroxylzahl von 600 mg KOH/g bis 1830 mg KOH/g bestimmt gemäß DIN EN ISO 4629-2:2016, und verschieden von A und B gegebenenfalls
(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete gekühlte Statikmischer umfasst, wobei jeder Statikmischer mindestens einen Zulauf, mindestens einen Ablauf, mindestens eine Mischvorrichtung und mindestens einen Wärmeübertrager aufweist, wobei der mindestens eine Wärmeübertrager kontinuierlich Wärme aus der Reaktionszone abführt und wobei der mindestens eine Wärmeübertrager ausgewählt ist aus der Liste bestehend aus einem Doppelmantel-Wärmeübertrager, einen Wärmeübertrager mit innenliegenden Wärmeübertragerrohren oder einem Wärmeübertrager mit einer Kombination aus einem Doppelmantel und innenliegenden Wärmeübertragerrohren.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) ein oder mehrere aliphatische oder cycloaliphatische monomere Diisocyanate ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus,

(B) ein oder mehrere aliphatische oder cycloaliphatische Diole mit einer Hydroxylzahl von 600 mg KOH/g bis 1830 mg KOH/g bestimmt gemäß DIN EN ISO 4629-2:2016, besonders bevorzugt ein oder mehrere aliphatische Diole mit einer Hydroxylzahl von 600 mg KOH/g bis 1830 mg KOH/g bestimmt gemäß DIN EN ISO 4629-2:2016 , noch bevorzugter Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus und verschieden von A und B gegebenenfalls

(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und einen Rohrreaktor oder mehrere in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) ein oder mehrere aliphatische oder cycloaliphatische monomere Diisocyanate ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus,

(B) ein oder mehrere aliphatische oder cycloaliphatische Diole mit einer Hydroxylzahl von 600 mg KOH/g bis 1830 mg KOH/g bestimmt gemäß DIN EN ISO 4629-2:2016, besonders bevorzugt ein oder mehrere aliphatische Diole mit einer Hydroxylzahl von 600 mg KOH/g bis 1830 mg KOH/g bestimmt gemäß DIN EN ISO 4629-2:2016 , noch bevorzugter Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus und verschieden von A und B gegebenenfalls

(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) ein oder mehrere aliphatische oder cycloaliphatische monomere Diisocyanate ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus,

(B) ein oder mehrere aliphatische oder cycloaliphatische Diole mit einer Hydroxylzahl von 600 mg KOH/g bis 1830 mg KOH/g bestimmt gemäß DIN EN ISO 4629-2:2016, besonders bevorzugt ein oder mehrere aliphatische Diole mit einer Hydroxylzahl von 600 mg KOH/g bis 1830 mg KOH/g bestimmt gemäß DIN EN ISO 4629-2:2016 , noch bevorzugter Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus und verschieden von A und B gegebenenfalls

(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt und wobei die mindestens eine Mischvorrichtung ein statisches Mischelement oder eine Anordnung von statischen Mischelementen ist.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) ein oder mehrere aliphatische oder cycloaliphatische monomere Diisocyanate ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus,

(B) ein oder mehrere aliphatische oder cycloaliphatische Diole mit einer Hydroxylzahl von 600 mg KOH/g bis 1830 mg KOH/g bestimmt gemäß DIN EN ISO 4629-2:2016, besonders bevorzugt ein oder mehrere aliphatische Diole mit einer Hydroxylzahl von 600 mg KOH/g bis 1830 mg KOH/g bestimmt gemäß DIN EN ISO 4629-2:2016 , noch bevorzugter Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus und verschieden von A und B gegebenenfalls

(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt, wobei die mindestens eine Mischvorrichtung ein statisches Mischelement oder eine Anordnung von statischen Mischelementen ist und wobei die mindestens eine Mischvorrichtung und der mindestens eine Wärmeübertrager zwischen dem mindestens einen Zulauf und dem mindestens einen Ablauf des Rohrreaktor liegen und sich die Gesamtheit aller Mischvorrichtungen und die Gesamtheit aller Wärmeübertrager jeweils über die gesamte Länge des Rohrreaktors erstrecken.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) ein oder mehrere aliphatische oder cycloaliphatische monomere Diisocyanate ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus,

(B) ein oder mehrere aliphatische oder cycloaliphatische Diole mit einer Hydroxylzahl von 600 mg KOH/g bis 1830 mg KOH/g bestimmt gemäß DIN EN ISO 4629-2:2016, besonders bevorzugt ein oder mehrere aliphatische Diole mit einer Hydroxylzahl von 600 mg KOH/g bis 1830 mg KOH/g bestimmt gemäß DIN EN ISO 4629-2:2016 , noch bevorzugter Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus und verschieden von A und B gegebenenfalls
(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt, wobei die mindestens eine Mischvorrichtung ein statisches Mischelement oder eine Anordnung von statischen Mischelementen ist, wobei die mindestens eine Mischvorrichtung und der mindestens eine Wärmeübertrager zwischen dem mindestens einen Zulauf und dem mindestens einen Ablauf des Rohrreaktor liegen und sich die Gesamtheit aller Mischvorrichtungen und die Gesamtheit aller Wärmeübertrager jeweils über die gesamte Länge des Rohrreaktors erstrecken und wobei die Komponenten A, B, C und die gebildeten Hydroxy-terminierten Prepolymere die Abschnitte der Reaktionszone nur einmal durchlaufen.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) ein oder mehrere aliphatische oder cycloaliphatische monomere Diisocyanate ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus,
(B) ein oder mehrere aliphatische oder cycloaliphatische Diole mit einer Hydroxylzahl von 600 mg KOH/g bis 1830 mg KOH/g bestimmt gemäß DIN EN ISO 4629-2:2016, besonders bevorzugt ein oder mehrere aliphatische Diole mit einer Hydroxylzahl von 600 mg KOH/g bis 1830 mg KOH/g bestimmt gemäß DIN EN ISO 4629-2:2016 , noch bevorzugter Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus und verschieden von A und B gegebenenfalls
(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete gekühlte Statikmischer umfasst, wobei jeder Statikmischer mindestens einen Zulauf, mindestens einen Ablauf, mindestens eine Mischvorrichtung und mindestens einen Wärmeübertrager aufweist, wobei der mindestens eine Wärmeübertrager kontinuierlich Wärme aus der Reaktionszone abführt und wobei der mindestens eine Wärmeübertrager ausgewählt ist aus der Liste bestehend aus einem Doppelmantel, innenliegenden Wärmeübertragerrohren oder einer Kombination aus einem Doppelmantel und innenliegenden Wärmeübertragerrohren.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) 1,5-Diisocyanatopentan (PDI), 1,6-Diisocyanatohexan (HDI) oder eine Mischung aus mindestens 2 hieraus, vorzugsweise 1,6-Diisocyanatohexan (HDI),
(B) 1,4-Butandiol, 1,6-Hexandiol oder Mischungen hieraus, besonders bevorzugt 1,4-Butandiol und verschieden von A und B gegebenenfalls

(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und einen Rohrreaktor oder mehrere in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) 1,5-Diisocyanatopentan (PDI), 1,6-Diisocyanatohexan (HDI) oder eine Mischung aus mindestens 2 hieraus, vorzugsweise 1,6-Diisocyanatohexan (HDI),
(B) 1,4-Butandiol, 1,6-Hexandiol oder Mischungen hieraus, besonders bevorzugt 1,4-Butandiol und verschieden von A und B gegebenenfalls
(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) 1,5-Diisocyanatopentan (PDI), 1,6-Diisocyanatohexan (HDI) oder eine Mischung aus mindestens 2 hieraus, vorzugsweise 1,6-Diisocyanatohexan (HDI),
(B) 1,4-Butandiol, 1,6-Hexandiol oder Mischungen hieraus, besonders bevorzugt 1,4-Butandiol und verschieden von A und B gegebenenfalls
(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt und wobei die mindestens eine Mischvorrichtung ein statisches Mischelement oder eine Anordnung von statischen Mischelementen ist.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) 1,5-Diisocyanatopentan (PDI), 1,6-Diisocyanatohexan (HDI) oder eine Mischung aus mindestens 2 hieraus, vorzugsweise 1,6-Diisocyanatohexan (HDI),
(B) 1,4-Butandiol, 1,6-Hexandiol oder Mischungen hieraus, besonders bevorzugt 1,4-Butandiol und verschieden von A und B gegebenenfalls
(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt, wobei die mindestens eine Mischvorrichtung ein statisches Mischelement oder eine Anordnung von statischen Mischelementen ist und wobei die mindestens eine Mischvorrichtung und der mindestens eine Wärmeübertrager zwischen dem mindestens einen Zulauf und dem mindestens einen Ablauf des Rohrreaktor liegen und sich die Gesamtheit aller Mischvorrichtungen und die Gesamtheit aller Wärmeübertrager jeweils über die gesamte Länge des Rohrreaktors erstrecken.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) 1,5-Diisocyanatopentan (PDI), 1,6-Diisocyanatohexan (HDI) oder eine Mischung aus mindestens 2 hieraus, vorzugsweise 1,6-Diisocyanatohexan (HDI),
(B) 1,4-Butandiol, 1,6-Hexandiol oder Mischungen hieraus, besonders bevorzugt 1,4-Butandiol und verschieden von A und B gegebenenfalls
(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt, wobei die mindestens eine Mischvorrichtung ein statisches Mischelement oder eine Anordnung von statischen Mischelementen ist, wobei die mindestens eine Mischvorrichtung und der mindestens eine Wärmeübertrager zwischen dem mindestens einen Zulauf und dem mindestens einen Ablauf des Rohrreaktor liegen und sich die Gesamtheit aller Mischvorrichtungen und die Gesamtheit aller Wärmeübertrager jeweils über die gesamte Länge des Rohrreaktors erstrecken und wobei die Komponenten A, B, C und die gebildeten Hydroxy-terminierten Prepolymere die Abschnitte der Reaktionszone nur einmal durchlaufen.

In einer bevorzugten Ausführungsform des erfindungsgemäßen Verfahrens zur kontinuierlichen lösungsmittelfreien Herstellung von Hydroxy-terminierten Prepolymeren werden die Komponenten

(A) 1,5-Diisocyanatopentan (PDI), 1,6-Diisocyanatohexan (HDI) oder eine Mischung aus mindestens 2 hieraus, vorzugsweise 1,6-Diisocyanatohexan (HDI),
(B) 1,4-Butandiol, 1,6-Hexandiol oder Mischungen hieraus, besonders bevorzugt 1,4-Butandiol und verschieden von A und B gegebenenfalls
(C) in Gegenwart von ein oder mehreren Schwermetall-freien Katalysatoren und/oder Zusatzstoffen,

in einer Reaktionszone umgesetzt, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und mindestens zwei kontinuierlich durchströmte in Reihe geschaltete gekühlte Statikmischer umfasst, wobei jeder Statikmischer mindestens einen Zulauf, mindestens einen Ablauf, mindestens eine Mischvorrichtung und mindestens einen Wärmeübertrager aufweist, wobei der mindestens eine Wärmeübertrager kontinuierlich Wärme aus der Reaktionszone abführt und wobei der mindestens eine Wärmeübertrager ausgewählt ist aus der Liste bestehend aus einem Doppelmantel, innenliegenden Wärmeübertragerrohren oder einer Kombination aus einem Doppelmantel und innenliegenden Wärmeübertragerrohren.

Im erfindungsgemäßen Verfahren können die Komponenten (A) und (B) gegebenenfalls in Gegenwart von einem oder mehreren Schwermetall-freien Katalysatoren und/oder Zusatzstoffen umgesetzt werden.

Geeignete erfindungsgemäße Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche Schwermetall-freie Katalysatoren.

Im Allgemeinen wird der Katalysator in Mengen von 0,001 bis 2,0 Gew.-%, bevorzugt von 0,005 bis 1,0 Gew.-% besonders bevorzugt von 0,01 bis 0,1 Gew.-% bezogen auf die DiisocyanatKomponente (A) eingesetzt. Der Katalysator kann in Substanz eingesetzt werden oder gelöst in der Diol-Komponente (B). Ein Vorteil ist hierbei, dass die dann erhaltenen Hydroxy-terminierten Prepolymere keine Verunreinigungen durch gegebenenfalls mitverwendete Katalysatorlösungsmittel enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε -Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch beim erfindungsgemäßen Verfahren Katalysatorlösungsmittel zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

In einer bevorzugten Ausführungsform werden die Komponenten (A) und (B) im erfindungsgemäßen Verfahren ohne einen Katalysator miteinander umgesetzt.

Neben den Komponenten (A) und (B) sowie den Katalysatoren können auch Zusatzstoffe eingesetzt werden. Dabei kann es sich beispielsweise um im Bereich der Polyurethantechnologie gängige Zusatzstoffe wie Farbstoffe, Füllstoffe, Verarbeitungshilfsmittel, Weichmacher, Nucleierungsmittel, Stabilisatoren, Flammschutzmittel, Entformungsmittel oder verstärkende Additive handeln. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Zusatzstoffe mehrerer Typen zu verwenden.

In einer bevorzugten Aufführungsform können als Zusatzstoffe auch geringe Mengen aromatischer Diisocyanate eingesetzt werden in Anteilen bis zu 2 Gew.-% bezogen auf die Stoffmenge der Komponente (A). Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin.

In einer weiteren bevorzugten Ausführungsform können als Zusatzstoffe Polyisocyanate zugesetzt werden. Unter Polyisocyanaten werden in diesem Zusammenhang organische Verbindungen mit mehr als zwei Isocyanatgruppen verstanden, wobei es unerheblich ist, ob diese mittels Phosgenierung oder nach phosgenfreien Verfahren erhalten wurden. Beispiele für geeignete Polyisocyanate sind Triphenylmethan-4,4',4"-triisocyanat oder Isocyanatomethyl-1,8-octandiisocyanat (TIN). Diese Polyisocyanate können bis zu einer Menge zugesetzt werden, bei der die erfindungsgemäßen Grenzen der OH-Funktionalität eingehalten werden.

In einer bevorzugten Ausführungsform werden keine aromatischen Diisocyanate und keine Polyisocyanate (gemäß obiger Definition) im erfindungsgemäßen Verfahren eingesetzt.

In einer anderen bevorzugten Ausführungsform können als Zusatzstoffe in geringen Mengen auch übliche gegenüber Isocyanaten reaktive mono-, di-, tri- oder polyfunktionelle Verbindungen in Anteilen bis zu 2 mol%, bezogen auf das Gesamtgewicht des Prepolymers bzw. der Prepolymere, z. B. als Kettenabbrecher, Hilfsmittel oder Entformungshilfen, eingesetzt werden. Beispielhaft genannt seien Alkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol und Stearylalkohol. Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit. Amine wie Butylamin und Stearylamin oder Thiole. Diese Zusatzstoffe können bis zu einer Menge zugesetzt werden, bei der die erfindungsgemäßen Grenzen der OH-Funktionalität eingehalten werden.

In einer bevorzugten Aufführungsform können als Zusatzstoffe auch höherfunktionelle Alkohole mit einer Hydroxylzahl von 600 mg KOH/g bis 1830 mg KOH/g, bestimmt gemäß DIN EN ISO 4629-2:2016, eingesetzt werden, insbesondere Triole wie beispielsweise Trimethylolethan, Trimethylolpropan oder Glycerin oder weitere höherfunktionelle Alkohole wie beispielsweise Ditrimethylolpropan, Pentaerythrit oder Dipentaerythrit.

In einer weiteren bevorzugten Ausführungsform des erfindungsgemäßen kontinuierlichen lösungsmittelfreien Verfahrens umfasst das Verfahren die folgenden Schritte:

i) kontinuierliches Vermischen der Gesamtmenge oder einer ersten Teilmenge der Komponente (B) mit einer ersten Teilmenge der Komponente (A) und gegebenenfalls der Komponenten C,

ii) kontinuierliches Reagieren lassen der Mischung aus Schritt i) in einem ersten Rohrreaktor,

iii) kontinuierliches Überführen des Stoffstroms aus dem vorherigen Schritt in einen weiteren Rohrreaktor, wobei der weitere Rohrreaktor durch mindestens eine Stofftransportleitung mit dem vorherigen Rohrreaktor verbunden ist und Zuführen einer weiteren Teilmenge der Komponente (A), gegebenenfalls weiteren Teilmenge der Komponente (B) und gegebenenfalls der Komponenten C,

iv) gegebenenfalls kontinuierliches Vermischen und Reagieren lassen weiterer Teilmengen der Komponenten (A) und (B) und gegebenenfalls einer weiteren Teilmenge der Komponente (C) in einen weiteren Rohrreaktor, um mindestens ein NCO-terminiertes Prepolymer herzustellen,

v) gegebenenfalls kontinuierliches Überführen des mindestens einen NCO-terminierten Prepolymers mit dem Stoffstrom aus dem vorherigen Rohrreaktor und/oder einer weiteren Teilmenge der Komponente (A), gegebenenfalls weiteren Teilmenge der Komponente (B) und gegebenenfalls der Komponenten C in einen weiteren Rohrreaktor,

vi) kontinuierliches Vermischen und Reagieren lassen der Mischung aus dem/den vorherigen Schritt(en) in dem weiteren Rohrreaktor,

vii) gegebenenfalls n-maliges Wiederholen der Schritte iii) und vi), gegebenenfalls der Schritte iii) - vi), wobei n 1 - 20 sein kann,

viii) gegebenenfalls Abkühlen und gegebenenfalls Granulieren der Hydroxy-terminierten Prepolymere.

Ebenfalls Gegenstand der Erfindung sind die Hydroxy-terminierten Prepolymere erhältlich aus dem erfindungsgemäßen kontinuierlichen lösungsmittelfreien Verfahren.

Die nach dem erfindungsgemäßen Verfahren hergestellten Hydroxy-terminierten Prepolymere können zu Formköpern, insbesondere Spritzguss- oder Extrusionsartikeln oder Pulver verarbeitet werden. Sie können weiterhin als Reaktionspartner für Hydroxy-reaktive Komponenten in 2-komponentigen Lack-, Kleb- oder Dichtstoffformulierungen verwendet werden. Weiterhin ist eine Verwendung als Reaktionspartner in chemischen Umsetzungen mit Hydroxy-reaktiven Komponenten zur Herstellung von Polymeren denkbar.

Zur näheren Erläuterung der Erfindung dienen die nachfolgend erläuterten Abbildungen und Beispiele, wobei diese lediglich Anschauungsbeispiele für bestimmte Ausführungsformen darstellen, nicht jedoch eine Beschränkung des Umfangs der Erfindung. Es zeigen im Einzelnen:

**Abbildung 1**: Schematischer Aufbau einer bevorzugten Ausführungsform zur Durchführung einer einstufigen kontinuierlichen Herstellung von Prepolymeren aus 1,6-Hexamethylendiisocyanat und 1,4-Butandiol in einem Verhältnis von 0,8 : 1,0.

**Abbildung 2:** Schematischer Aufbau einer bevorzugten Ausführungsform zur Durchführung einer zweistufigen kontinuierlichen Herstellung von Prepolymeren aus 1,6-Hexamethylendiisocyanat und 1,4-Butandiol in einem Verhältnis von 0,8 : 1,0.

Die Erfindung soll anhand der nachfolgenden Beispiele näher erläutert werden, ohne sie jedoch hierauf zu beschränken.

### Beispiele

Alle Prozentangaben beziehen sich, soweit nichts Anderslautendes vermerkt, auf das Gewicht.

**Verwendete Rohstoffe:**

1,6-Hexamethylendiisocyanat (HDI, Reinheit ≥ 99 Gew.-%) wurde von der Covestro AG bezogen. 1,4-Butandiol (BDO) wurde von der Firma Ashland bezogen.

**Mittlere kalorische Temperatur Mischtemperatur**

Die mittlere kalorische Temperatur wurde mit der Gleichung 1 berechnet.

**Bestimmung der komplexen Viskosität:**

Die komplexe Viskosität wurde mit einem ARES-G2 Oszillationsrheometer des Herstellers TA-Instruments nach ISO 6721-10:2015 gemessen. Dazu wurde die Probe zuvor mindestens 16 Stunden im Trockenschrank bei 90 °C getrocknet und anschließend bei 200 °C innerhalb von 30 Sekunden zu Platten von 25 mm bzw. 35 mm Durchmesser verpresst. Diese Proben wurden in den auf die Messtemperatur vorgeheizten Ofen des Oszillationsrheometers platziert. Nachdem die Probe die Messtemperatur erreicht hatte, wurde die oszillierende Messung in Platte-Platte Geometrie unter Stickstoffatmosphäre gestartet. Bei der Messtemperatur wurden Speicher- und Verlustschubmodul im Bereich anfangend bei 100 Hz bis 0,01 Hz bestimmt.

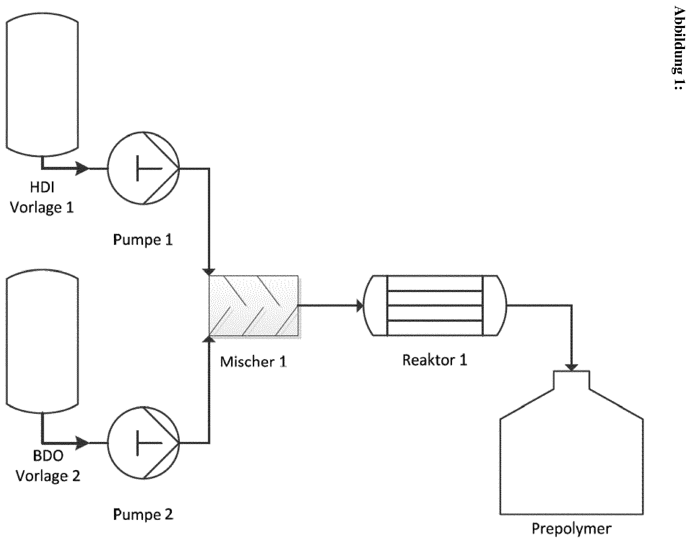

Erfindungsgemäßes Beispiel 1 (Abbildung 1):

Aus Vorlage 1 wurden 311,7 g/h HDI mit einer Pumpe 1 (Type: SyrDos2 mit 10 mL Spritzen der Firma HiTec Zang) in den Mischer 1 gefördert. Zeitgleich wurden aus Vorlage 2 208,7 g/h BDO mit einer Pumpe 2 (Type: SyrDos2 mit 10 mL Spritzen der Firma HiTec Zang) in denselben Mischer gepumpt. Bei Raumtemperatur wurden beide Stoffströme im Mischer 1 gemischt. Als Mischer wurde ein Kaskadenmischer der Firma Ehrfeld Microtechnik BTS GmbH verwendet. Die Mischung wurde anschließend in den bei 190 °C temperierten Reaktor 1 (Typ CSE-X/8G, Form G, Innendurchmesser = 12,3 mm, Länge = 500 mm der Firma Fluitec) geleitet. Die Verweilzeit betrug 5 Minuten. Die Temperaturerhöhung im Wärmeübertrager betrug 53 °C. Die mittlere kalorische Temperatur am Eintritt betrug 25 °C. Die komplexe Viskosität bei 10 Hz und 190 °C ist 0,15 Pa·s. Die mittlere OH Funktionalität beträgt 2.

Erfindungsgemäßes Beispiel 2 (Abbildung):

Aus Vorlage 1 wurden 222,44 g/h HDI mit einer Pumpe 1 (SyrDos2, 10mL Spritzen der Firma HiTec Zang) in den Mischer 1 gefördert. Zeitgleich wurden aus Vorlage 2 298,0 g/h BDO mit einer Pumpe 2 (SyrDos2, 10 mL Spritzen der Firma HiTec Zang) in denselben Mischer gefördert. Bei Raumtemperatur wurden beide Stoffströme im Mischer gemischt. Als Mischer wurde ein Kaskadenmischer der Firma Ehrfeld Microtechnik BTS GmbH verwendet. Die Mischung wurde anschließend in den auf 100 °C temperierten Reaktor 1 (Typ CSE-X/8G, Form G, Innendurchmesser = 12,3 mm, Länge = 1000 mm der Firma Fluitec) geleitet. Das gewonnene Prepolymer mit dem Verhältnis HDI : BDO von 0,4 : 1,0 wurde anschließend mit auf 190 °C vorgeheiztem 1,6-Hexamethylendiisocyanat aus der Vorlage 3 (222,44 g/h) im Mischer 2 (10 SMX™ plus (DN 6) Mischelemente der Firma Sulzer) bei 190 °C vermischt. Die Mischung wurde anschließend in den bei 190 °C temperierten Reaktor 2 (Typ CSE-X/8G, Form G, Innendurchmesser = 12,3 mm, Länge = 500 mm der Firma Fluitec) geleitet. Die Verweilzeit im Reaktor 2 betrug 3,6 Minuten. Die Rohrleitungen vom Reaktor 1 zum Reaktor 2 sowie der Mischer 2 wurden auf ca. 190 °C begleitbeheizt. Die Temperaturerhöhung im zweiten Wärmeübertrager betrug 42 °C. Die mittlere kalorische Temperatur im Eintritt des ersten Reaktors betrug 25 °C. Die kalorische Temperatur bei der zweiten Zugabe von HDI betrug 190 °C. Die komplexe Viskosität des Produktes bei 10 Hz und 190 °C betrug 0,11 Pa·s. Die mittlere OH-Funktionalität beträgt 2.

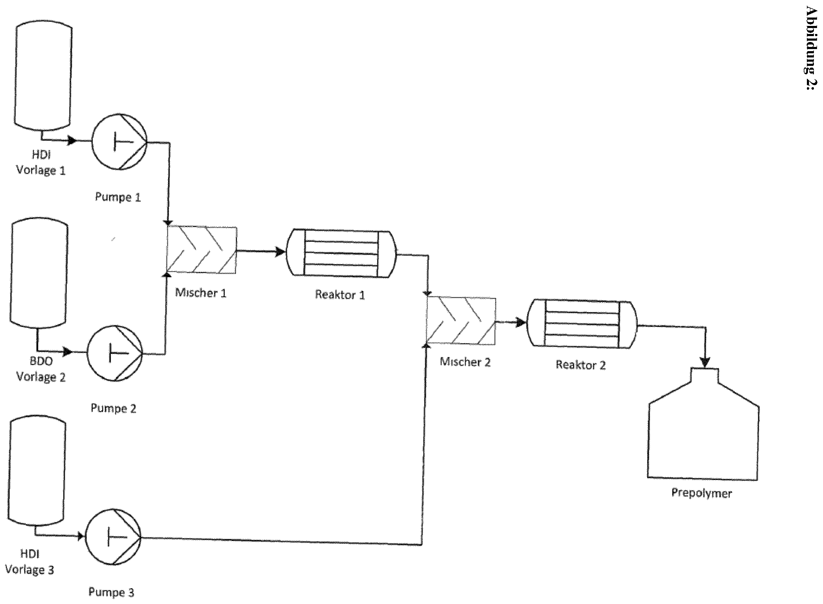

Erfindungsgemäßes Beispiel 3 (Abbildung 2):

Aus Vorlage 1 wurden 1,49 kg/h HDI mit einer Pumpe 1 (Zahnringpumpe der Firma HNP, MZR 7255) in den Mischer 1 gefördert. Zeitgleich wurden aus Vorlage 2 2,00 kg/h BDO mit einer Pumpe 2 (Firma HNP, MZR 7205) in denselben Mischer gefördert. Bei Raumtemperatur wurden beide Stoffströme im Mischer gemischt. Als Mischer wurde ein Sulzer SMX, Durchmesser 6 mm, Verhältnis von Länge zu Durchmesser L/D = 10 verwendet. Die Mischung wurde anschließend in den auf 150 °C temperierten Reaktor 1 (Typ CSE-X/8G, Form G, Innendurchmesser = 21,0 mm, Länge = 1000 mm der Firma Fluitec) geleitet. Das gewonnene Prepolymer mit dem Verhältnis HDI : BDO von 0,4 : 1,0 wurde anschließend 1,6-Hexamethylendiisocyanat aus der Vorlage 3 (1,49 kg/h; Pumpe 3: Zahnringpumpe der Firma HNP, MZR 7255) im Mischer 2 (Sulzer SMX, Durchmesser 6 mm, Verhältnis von Länge zu Durchmesser L/D = 10) bei 121,44 °C vermischt. Die Mischung wurde anschließend in den bei 182 °C temperierten Reaktor 2 (Typ CSE-X/8G, Form G, Innendurchmesser = 21,0 mm, Länge = 1500 mm der Firma Fluitec) geleitet. Die Verweilzeit im Reaktor 2 betrug 6,5 Minuten. Die Rohrleitungen vom Reaktor 1 zum Reaktor 2 sowie der Mischer 2 wurden auf ca. 180 °C begleitbeheizt. Die Temperaturerhöhung im zweiten Wärmeübertrager betrug 37,93 °C. Die mittlere kalorische Temperatur im Eintritt des ersten Reaktors betrug 25 °C. Die kalorische Temperatur bei der zweiten Zugabe von HDI betrug 121,44 °C (siehe Rechnung).

Die komplexe Viskosität des Produktes bei 10 Hz und 190 °C betrug 0,15 Pa·s. Die mittlere OH-Funktionalität beträgt 2.

Rechnung für die kalorische Temperatur:

Aus Gleichung 1 ist bekannt:

$$T_{mix} = \frac{m_1 \cdot c_1 \cdot T_1 + m_2 \cdot c_2 \cdot T_2}{m_1 \cdot c_1 + m_2 \cdot c_2}$$

Dabei ist $m_1$ der Massenstrom HDI, $c_1$ die Wärmekapazität von HDI, $T_1$ die Temperatur von HDI, $m_2$ ist der Massenstrom des Oligomers, $c_2$ die Wärmekapazität des Oligomers und $T_2$ die Temperatur des Oligomers.

Zuerst wurde eine Abschätzung der Mischtemperatur ($T_{mix1}$) vorgenommen unter Verwendung folgender Gleichung:

$$T_{mix1} = \frac{m_1 \cdot T_1 + m_2 \cdot T_2}{m_1 + m_2}$$

$$T_{mix1} = \frac{1,49\frac{kg}{h} \cdot 28\,°C + 3,49\frac{kg}{h} \cdot 156,4\,°C}{1,49\frac{kg}{h} + 3,49\frac{kg}{h}}$$

$$T_{mix1} = 117,95\,°C$$

Aus experimentellen Daten (Wärmekapazität vs. Temperatur) wurde mittels einer lineare Regression die Wärmekapazität von HDI angenähert. Diese Beziehung wurde verwendet um für die Mischtemperatur ($T_{mix1}$) die Wärmekapazität von HDI zu berechnen (T ist hier die Temperatur in °C)

$$c_1(T) = a \cdot T + b$$

mit $a = 1{,}458\,\frac{J}{kg\,K^2}$ und $b = 1641{,}3\,\frac{J}{kg\,K}$

Die mittlere Wärmekapazität zwischen den Temperaturen $T_1$ und $T_2$ ist dann

$$\bar{c}_1 = \frac{\int_{T_1}^{T_2} c_1(T)}{T_2 - T_1} = \frac{\frac{a}{2} \cdot (T_2^2 - T_1^2) + b \cdot (T_2 - T_1)}{T_2 - T_1} = \frac{T_1 + T_2}{2} a + b = \frac{c_1(T_1) + c_2(T_2)}{2}$$

Mit diesen Daten wurde dann die mittlere Wärmekapazität des HDI zwischen $T_1$ und $T_{mix1}$ bestimmt zu

$$c_{1\_mix1} = \frac{T_1 + T_{mix1}}{2} \cdot 1{,}458\,\frac{J}{kg\,K^2} + 1641{,}3\,\frac{J}{kg\,K}$$

$$c_{1\_mix1} = \frac{28\,°C + 117{,}95\,°C}{2} \cdot 1{,}458\,\frac{J}{kg\,K^2} + 1641{,}3\,\frac{J}{kg\,K}$$

$$c_{1\_mix1} = 1747{,}70 \frac{J}{kg \cdot K}$$

Dann wurde die Mischtemperatur ($T_{mix2}$) aus Gleichung 1 durch Einsetzen der ermittelten Wärmekapazität von HDI $c_{1\_mix1}$ ermittelt:

$$T_{mix2} = \frac{m_1 \cdot c_{1\_mix1} \cdot T_1 + m_2 \cdot c_2 \cdot T_2}{m_1 \cdot c_{1\_mix1} + m_2 \cdot c_2}$$

$$T_{mix2} = \frac{1{,}49 \frac{kg}{h} \cdot 1747{,}70 \frac{J}{kg \cdot K} \cdot 28\,^{\circ}C + 3{,}49 \frac{kg}{h} \cdot 2000 \frac{J}{kg \cdot K} \cdot 156{,}4\,^{\circ}C}{1{,}49 \frac{kg}{h} \cdot 1747{,}70 \frac{J}{kg \cdot K} + 3{,}49 \frac{kg}{h} \cdot 2000 \frac{J}{kg \cdot K}}$$

$$T_{mix2} = 121{,}48\,^{\circ}C$$

Anschließend wurde erneut die Wärmekapazität von HDI ($c_{1\_mix2}$) unter Berücksichtigung der Mischtemperatur $T_{mix2}$ über die Geradengleichung bestimmt:

$$c_{1\_mix2} = \frac{T_1 + T_{mix2}}{2} \cdot 1{,}458 \frac{J}{kg\,K^2} + 1641{,}3 \frac{J}{kg\,K}$$

$$c_{1\_mix2} = \frac{28\,^{\circ}C + 121{,}48\,^{\circ}C}{2} \cdot 1{,}458 \frac{J}{kg\,K^2} + 1641{,}3 \frac{J}{kg\,K}$$

$$c_{1\_mix2} = 1750{,}27 \frac{J}{kg \cdot K}$$

Die Wärmekapazität des Oligmers $c_2$ wurde bei diesen Rechnungen zu 2000 J/(kg·K) gesetzt, dieser Wert wurde aus DSC-Messungen bestimmt und über den interessierenden Bereich abgeschätzt. Die Wärmekapazität des Oligomers liegt in der Größenordnung für Thermoplasten. (Literatur: BASF: "Thermoplastische Polyurethan-Elastomere (TPU)" Seite 24 unter http://www.polyurethanes.basf.de/pu/solutions/us/function/conversions:/publish/content/group/Arb eitsgebiete_und_Produkte/Thermoplastische_Spezialelastomere/Infomaterial/elastollan_material_d. pdf (Abgerufen am 30.10.2018)).

Anschließend wurde die kalorische Temperatur für die Mischung von HDI und Oligomer berechnet unter Verwendung der zuvor ermittelten Werte:

$$T_{mix} = \frac{m_1 \cdot c_{1\_mix2} \cdot T_1 + m_2 \cdot c_2 \cdot T_2}{m_1 \cdot c_{1\_mix2} + m_2 \cdot c_2}$$

$$T_{mix} = \frac{1{,}49 \frac{kg}{h} \cdot 1750{,}27 \frac{J}{kg \cdot K} \cdot 28\,^{\circ}C + 3{,}49 \frac{kg}{h} \cdot 2000 \frac{J}{kg \cdot K} \cdot 156{,}4\,^{\circ}C}{1{,}49 \frac{kg}{h} \cdot 1750{,}27 \frac{J}{kg \cdot K} + 3{,}49 \frac{kg}{h} \cdot 2000 \frac{J}{kg \cdot K}}$$

$$T_{mix} = 121{,}44\,^{\circ}C$$

Die Abweichung der iterativen Berechnung (deutlich kleiner als die Meßgenauigkeit) ist hinreichend klein, so dass dies als Endwert gesetzt werden kann.

**Patentansprüche**

1. Verfahren zur kontinuierlichen lösungsmittelfreien Herstellung von Hydroxy-terminierten Prepolymeren durch Umsetzung der Komponenten

    (A) einem oder mehreren aliphatischen, cycloaliphatischen oder araliphatischen monomeren Diisocyanaten,
    (B) einem oder mehreren Diolen mit einer Hydroxylzahl von 600 mg KOH/g bis 1830 mg KOH/g bestimmt gemäß DIN EN ISO 4629-2:2016 und verschieden von A und B gegebenenfalls
    (C) in Gegenwart von einem oder mehreren Schwermetall-freien Katalysatoren und/oder Zusatzstoffen,

    in einer Reaktionszone, wobei die Komponenten (A) und (B) in einem molaren Verhältnis im Bereich von 0,6 : 1,0 bis 0,95 : 1,0 eingesetzt werden, wobei die Gesamtmenge der Reaktionsmischung aus den Komponenten (A), (B) und gegebenenfalls (C) in die Reaktionszone kontinuierlich eingetragen und zur Reaktion gebracht werden und die Hydroxy-terminierten Prepolymere am Ende der Reaktionszone kontinuierlich ausgetragen werden, wobei die Reaktionszone von dem Stoffstrom kontinuierlich durchströmt wird und einen Rohrreaktor oder mehrere in Reihe geschaltete Rohrreaktoren umfasst, wobei jeder Rohrreaktor mindestens einen Zulauf, mindestens einen Ablauf, mindestens eine Mischvorrichtung und mindestens einen Wärmeübertrager aufweist und wobei der mindestens eine Wärmeübertrager kontinuierlich Wärme aus der Reaktionszone abführt.

2. Verfahren nach Anspruch 1, **dadurch gekennzeichnet, dass** die maximale Viskosität des Stoffstroms in der Reaktionszone unterhalb von 1 Pa·s bei einer Messtemperatur von 190 °C und einer Frequenz von 10 Hz bestimmt gemäß ISO 6721-10:2015 liegt.

3. Verfahren nach Anspruch 1 oder 2, **dadurch gekennzeichnet, dass** die Reaktionszone mindestens zwei kontinuierlich durchströmte in Reihe geschaltete Rohrreaktoren umfasst.

4. Verfahren nach einem der vorhergehenden Ansprüche, **dadurch gekennzeichnet, dass** die mindestens eine Mischvorrichtung ein statisches Mischelement oder eine Anordnung von statischen Mischelementen ist.

5. Verfahren nach einem der vorhergehenden Ansprüche, **dadurch gekennzeichnet, dass** die mindestens eine Mischvorrichtung und der mindestens eine Wärmeübertrager zwischen dem mindestens einen Zulauf und dem mindestens einen Ablauf des Rohrreaktor liegen und sich die Gesamtheit aller Mischvorrichtungen und die Gesamtheit aller Wärmeübertrager jeweils über die gesamte Länge des Rohrreaktors erstrecken.

6. Verfahren nach einem der vorhergehenden Ansprüche, **dadurch gekennzeichnet, dass** die Reaktionszone einen oder mehrere Abschnitte aufweist, die jeweils unabhängig voneinander temperiert sind, vorzugsweise wobei der erste Abschnitt in der Reaktionszone die niedrigste Temperatur aufweist, besonders bevorzugt wobei der erste Abschnitt in der Reaktionszone die niedrigste Temperatur aufweist, alle darauf folgenden Abschnitte in der Reaktionszone jeweils eine höhere Temperatur aufweisen als der jeweils vorherige Abschnitt und der letzte Abschnitt in der Reaktionszone die höchste Temperatur aufweist.

7. Verfahren nach einem der vorhergehenden Ansprüche, **dadurch gekennzeichnet, dass** jeder Rohrreaktor mindestens einen Doppelmantel oder innenliegende Wärmeübertragerrohre oder einen Doppelmantel und innenliegende Wärmeübertragerrohre aufweist.

8. Verfahren nach einem der vorhergehenden Ansprüche, **dadurch gekennzeichnet, dass** die gemeinsam in die Reaktionszone eingebrachten Komponenten (A), (B) und gegebenenfalls (C) vor Eintritt in die Reaktionszone vorgemischt oder vordispergiert werden, wobei die Komponenten (A) und (B) vorzugsweise in flüssigem Zustand vorliegen und vorzugsweise beim Eintritt in den ersten Rohrreaktor in der Reaktionszone eine mittlere kalorische Temperatur von 0 °C bis 80 °C, besonders bevorzugt von 10 °C bis 60 °C, noch bevorzugter von 20 °C bis 50 °C aufweisen.

9. Verfahren nach einem der vorhergehenden Ansprüche, **dadurch gekennzeichnet, dass** in einen ersten Rohrreaktor in der Reaktionszone die Gesamtmenge der Komponente (B), eine erste Teilmenge der Komponente (A) und gegebenenfalls eine erste Teilmenge der Komponente (C) eingetragen und zur Reaktion gebracht werden, und in mindestens einen weiteren Rohrreaktor in der Reaktionszone eine weitere Teilmenge der Komponente (A) und gegebenenfalls eine weitere Teilmenge der Komponente (C) zugeführt und zur Reaktion gebracht werden, oder in einen ersten Rohrreaktor in der Reaktionszone eine erste Teilmenge der Komponente (B), eine erste Teilmenge der Komponente (A) und gegebenenfalls eine erste Teilmenge der Komponente (C) eingetragen und zur Reaktion gebracht werden, und in mindestens einen weiteren Rohrreaktor in der Reaktionszone eine weitere Teilmenge der Komponente (B), eine weitere Teilmenge der Komponente (A) und gegebenenfalls eine weitere Teilmenge der Komponente (C) zugeführt und zur Reaktion gebracht werden,

wobei die Summe aller Teilmengen der Komponente (A), die Summe aller Teilmengen der Komponente (B) und die Summe aller Teilmengen der Komponente (C), die in der Reaktionszone eingetragen werden, jeweils die Gesamtmenge der eingesetzten Komponenten (A), (B) und gegebenenfalls (C) ist, wobei der mindestens eine weitere Rohrreaktor in der Reaktionszone auf den ersten Rohrreaktor in der Reaktionszone folgt und wobei zwischen den Rohreaktoren jeweils eine Mischvorrichtung angeordnet ist, die den Stoffstrom aus dem Ablauf des vorherigen Rohrreaktors mit den weiteren Teilmengen der Komponenten A, B und C mischt und wobei dieses Gemisch dann in den Zulauf des nachfolgenden Rohrreaktors zugeführt wird.

10. Verfahren nach Anspruch 9, **dadurch gekennzeichnet, dass** die Komponenten (A), (B) und gegebenenfalls (C) oder eine Mischung der Komponenten A und C oder B und C beim Eintritt in den mindestens einen weiteren Rohrreaktor in der Reaktionszone vorgewärmt sind, vorzugweise auf eine mittlere kalorische Temperatur von 70 bis 240 °C, bevorzugter von 90 bis 220 °C, besonders bevorzugter 110 bis 200 °C.

11. Verfahren nach einem der vorhergehenden Ansprüche, **dadurch gekennzeichnet, dass** die Gesamtmenge der Komponente (A) in Teilmengen in die Reaktionszone eingetragen wird, wobei die erste eingetragene Teilmenge der Komponente (A) größer ist als jede weitere danach eingetragene Teilmenge der Komponente (A), vorzugsweise wobei die erste in die Reaktionszone eingetragene Teilmenge der Komponente (A) von 20 mol-% bis 80 mol-%, vorzugsweise von 25 mol-% bis 60 mol-%, noch bevorzugter von 30 mol-% bis 50 mol-% bezogen auf die molare Gesamtmenge der im Verfahren eingesetzten Komponente (A) ist.

12. Verfahren nach einem der vorhergehenden Ansprüche, **dadurch gekennzeichnet, dass** jeder Rohrreaktoren ein gekühlter Statikmischer ist.

13. Verfahren nach einem der vorhergehenden Ansprüche, **dadurch gekennzeichnet, dass** die Komponenten A, B, C und die gebildeten Hydroxy-terminierten Prepolymere die Abschnitte der Reaktionszone nur einmal durchlaufen.

14. Verfahren nach einem der vorhergehenden Ansprüche, **dadurch gekennzeichnet, dass** als Komponente (A) ein oder mehrere aliphatische und / oder cycloaliphatische monomere Diisocyanate eingesetzt werden, vorzugsweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4-bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus.

15. Verfahren nach einem der vorhergehenden Ansprüche, **dadurch gekennzeichnet, dass** als Komponente (B) ein oder mehrere aliphatische, cycloaliphatische und/oder araliphatische Diole mit einer Hydroxylzahl von 600 mg KOH/g bis 1830 mg KOH/g bestimmt gemäß DIN EN ISO 4629-2:2016, vorzugsweise ein oder mehrere aliphatische oder cycloaliphatische Diole mit einer Hydroxylzahl von 600 mg KOH/g bis 1830 mg KOH/g bestimmt gemäß DIN EN ISO 4629-2:2016, besonders bevorzugt ein oder mehrere aliphatische Diole mit einer Hydroxylzahl von 600 mg KOH/g bis 1830 mg KOH/g bestimmt gemäß DIN EN ISO 4629-2:2016 , noch bevorzugter Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus, eingesetzt werden.

16. Verfahren nach einem der vorhergehenden Ansprüche, **dadurch gekennzeichnet, dass** die Hydroxy-terminierten Prepolymere eine aus den Funktionalitäten der Edukte berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 aufweisen.

17. Verfahren nach einem der vorhergehenden Ansprüche, **dadurch gekennzeichnet, dass** die durch die Gesamtheit der Wärmeübertrager abgeführte Wärme je Rohrreaktor von 10 % bis 90 %, vorzugsweise von 20 % bis 70 %, besonders bevorzugt von 25 % bis 60 % der in dem jeweiligen Rohrreaktor freigesetzten gesamten Reaktionsenthalpie beträgt.

**Abbildung 1:**

**Abbildung 2:**

**Europäisches Patentamt**
**European Patent Office**
**Office européen des brevets**

# EUROPÄISCHER RECHERCHENBERICHT

Nummer der Anmeldung

EP 19 21 6832

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 0 670 339 A1 (BAYER AG [DE]) 6. September 1995 (1995-09-06) * Absatz [0021] * * Absatz [0024] * * Beispiele 1-4 * * Beispiele 5-9 * ----- | 1-17 | INV. C08G18/08 C08G18/10 C08G18/32 C08G18/73 |
| Y | Striko Verfahrenstechnik: "Statische Mischer Wärmetauscher", , 1. Oktober 2014 (2014-10-01), XP055707367, Gefunden im Internet: URL:https://www.striko.de/files/pdf/statische_mischer_und_waermetauscher/Broschuere_SM_WAT_STRIKO_DE_20141031.pdf [gefunden am 2020-06-22] * das ganze Dokument * ----- | 1-17 | |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| München | 22. Juni 2020 | Sütterlin, Martin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.......................................................................................

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 21 6832

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-06-2020

| Im Recherchenbericht angeführtes Patentdokument | Datum der Veröffentlichung | Mitglied(er) der Patentfamilie | Datum der Veröffentlichung |
|---|---|---|---|
| EP 0670339 A1 | 06-09-1995 | CA 2143566 A1<br>DE 4406948 A1<br>EP 0670339 A1<br>US 5567791 A | 04-09-1995<br>07-09-1995<br>06-09-1995<br>22-10-1996 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0114441 A
- EP 0519734 A

- DE 2901774 A

**In der Beschreibung aufgeführte Nicht-Patentliteratur**

- Polyurethane. **G. OERTEL.** Kunststoff Handbuch. Hanser Verlag, vol. 7, 99ff
- **MORAN, S. ; HENKEL, K.-D.** Reactor Types and Their Industrial Applications. *Ullmann's Encyclopedia of Industrial Chemistry,* 2016, 149
- Richmannsche Mischungsregel. Wikipedia, Die freie Enzyklopädie. Bearbeitungsstand. 25. September 2018
- Methoden der organischen Chemie. **HOUBEN-WEYL.** Makromolekulare Stoffe. Georg Thieme Verlag, 1987, vol. E20, 1587-1593

- *Justus Liebigs Annalen der Chemie,* 1949, vol. 562, 75-136
- High Polymers. **J.H. SAUNDERS ; K.C. FRISCH.** Polyurethane. Verlag Interscience Publishers, 1962, vol. XVI
- **R. GÄCHTER ; H. MÜLLER.** Taschenbuch für Kunststoff-Additive. Hanser Verlag München, 1990